# EUROPEAN PATENT APPLICATION

(11) **EP 4 503 378 A1**
(43) Date of publication of application: **05.02.2025**
(21) Application number: 23778465.7
(22) Date of filing: 31.03.2023
(51) Int. Cl.: H02J 7/34

(54) **ENERGY STORAGE DEVICE AND CHARGING/DISCHARGING CONTROL SYSTEM THEREFOR**

(30) Priority: 31.03.2022 CN 202210345985; 31.03.2022 CN 202210344320
(71) Applicant: Zhejiang Lera New Energy Power Technology Co., Ltd., Ningbo, Zhejiang 315000 (CN)
(72) Inventor: LI, Bin, Ningbo, Zhejiang 315000 (CN)
(74) Representative: Miller, Ronald Anthony
(86) International application number: PCT/CN2023/085496
(87) International publication number: WO 2023/186101

(57) **Abstract**

The present disclosure provides an energy storage device and a charging/discharging control system therefor. The energy storage device includes an energy storage power supply and a battery pack detachably connected to the energy storage power supply. The energy storage power supply includes a housing provided with a mounting part, where the mounting part includes an interface; a built-in battery and an inverter which are arranged in the housing without interfering with the mounting part; and an input interface and an output interface which are provided on the housing for a user to contact and use. The battery pack is freely detachably connected to the mounting part and includes a power output port configured to be mechanically and electrically connected to the interface. When the battery pack is configured for the energy storage power supply, the battery pack at least has two different operation states including a first operation state and a second operation state, where in the first operation state, the battery pack is charged by electrical power from the energy storage power supply through the mechanical and electrical connection between the power output port and the interface, and in the second operation state, the battery pack and the built-in battery are coupled to the inverter through the mechanical and electrical connection between the power output port and the interface, in order to output an alternating current through the output interface.

## Description

### TECHNICAL FIELD

The present disclosure relates to the field of energy storage, and particularly to an energy storage device and a charging/discharging control system therefor.

### BACKGROUND

An energy storage device can be used as an outdoor power supply or an emergency power supply. When an electrical device that needs electricity to operate is connected to the energy storage device, the energy storage device can supply electrical power to the electrical device. When the quantity of electricity of the energy storage device is insufficient or used up, the energy storage device may be connected to and charged by an external power supply.

A battery is arranged inside the energy storage device, and the battery can be charged and discharged. The energy storage device further includes a current converter for converting the current flowing into and out of the battery, so that the current can be converted into a current suitable for charging the battery or a current suitable for supplying electrical power to the electrical device.

The power of the energy storage device is generally determined by the power of the battery arranged in the energy storage device, and an upper limit of discharge power of the energy storage device is limited by the power of the battery. Energy storage devices are usually classified and rated according to the power . Consumers generally purchase energy storage devices based on the required power, and the maximum power of the energy storage device is limited. If the electricity demand of the electrical device exceeds the maximum power of the energy storage device, the energy storage device cannot effectively meet the electricity demand, affecting the consumer's experience.

### SUMMARY

An objective of the present disclosure is to provide an energy storage device and a charging/discharging control system therefor. The capacity of the energy storage device can be expanded to meet higher electricity demands.

Another objective of the present disclosure is to provide an energy storage device and a charging/discharging control system therefor, where a built-in battery included in the energy storage device can be connected to a battery pack to achieve the capacity expansion. By conductively connecting the built-in battery to the battery pack, the capacity of the energy storage device can be expanded to supply electrical power to a larger load.

Yet another objective of the present disclosure is to provide an energy storage device and a charging/discharging control system therefor, where an appropriate charging method can be selected to charge the built-in battery and the battery pack according to actual statuses of the built-in battery and the battery pack.

Still another objective of the present disclosure is to provide an energy storage device and a charging/discharging control system therefor, where when the energy storage device is charged, the battery pack connected to the energy storage device may be charged first, so that the charging of the battery pack can be completed as soon as possible for use by the user, and then the built-in battery is charged.

Still yet another objective of the present disclosure is to provide an energy storage device and a charging/discharging control system therefor, where an external power supply may be used to simultaneously supply electrical power to a load and charge the built-in battery, so that when the supply of electrical power from the external power supply is stopped or interrupted, the built-in battery can be switched from a charged state to a discharging state to supply electrical power to the load.

Another objective of the present disclosure is to provide an energy storage device and a charging/discharging control system therefor, where after the built-in battery and the battery pack are connected in a capacity-combined manner, the battery pack can continue to discharge after the built-in battery is fully discharged, to prolong the discharge time of the energy storage device.

Yet another objective of the present disclosure is to provide an energy storage device and a charging/discharging control system therefor, where the built-in battery is provided with a low-voltage protection mechanism, and after the built-in battery is discharged and enters a low-voltage protection state, switching is performed to allow the battery pack to continue to discharge.

Still another objective of the present disclosure is to provide an energy storage device and a charging/discharging control system therefor, where the built-in battery can be charged by the battery pack, to ensure the use of the energy storage device in an emergency situation.

Still yet another objective of the present disclosure is to provide an energy storage device and a charging/discharging control system therefor, where the battery pack may be discharged through the energy storage device, to meet an electricity demand of a load connected to the energy storage device.

Another objective of the present disclosure is to provide an energy storage device and a charging/discharging control system therefor, where the energy storage device includes a power transmitter, the built-in battery is circuit-connected to the power transmitter, and the power transmitter can convert the current flowing into and out of the built-in battery to meet diversified electricity demands.

Yet another objective of the present disclosure is to provide an energy storage device and a charging/discharging control system therefor, where the power transmitter includes an input interface, and the input interface may be connected to an external power supply to acquire a current, so that the energy storage device can store electricity for independent use without the external power supply.

Still another objective of the present disclosure is to provide an energy storage device and a charging/discharging control system therefor, where the power transmitter includes an inverter, and the inverter can perform alternating current (AC)-direct current (DC) rectification, DC-AC inversion, and DC-DC conversion, so that the energy storage device can meet diversified electricity demands.

Still yet another objective of the present disclosure is to provide an energy storage device and a charging/discharging control system therefor, where the power transmitter further includes an output interface, and the output interface can output an alternating current and a direct current to meet different electricity demands.

According to an aspect of the present disclosure, the present disclosure provides an energy storage device, including an energy storage power supply and a battery pack detachably connected to the energy storage power supply, where
the energy storage power supply includes:
a housing, where the housing is provided with a mounting part and the mounting part includes an interface; a built-in battery and an inverter, where the built-in battery and the inverter are arranged in the housing without interfering with the mounting part; and
an input interface and an output interface, where the input interface and the output interface are provided on the housing for a user to contact and use;
the battery pack is freely detachably connected to the mounting part and includes a power output port configured to be mechanically and electrically connected to the interface;
when the battery pack is configured for the energy storage power supply, the battery pack at least has two different operation states including a first operation state and a second operation state, where
in the first operation state,
the battery pack is charged by electrical power from the energy storage power supply through the mechanical and electrical connection between the power output port and the interface; and
in the second operation state,
the battery pack and the built-in battery are coupled to the inverter through the mechanical and electrical connection between the power output port and the interface, in order to output an alternating current through the output interface.

According to an example of the present disclosure, the battery pack at least includes two charging modes including a first charging mode and a second charging mode,
in the first charging mode, when the input interface is connected to an external power supply for charging, the battery pack is charged by electrical power from the external power supply through the mechanical and electrical connection between the power output port and the interface; and
in the second charging mode, when the input interface is not connected to an external power supply for charging, the battery pack is charged by electrical power from the built-in battery through the mechanical and electrical connection between the power output port and the interface.

According to an example of the present disclosure, when the input interface is connected to an external power supply for charging, one of the battery pack and the built-in battery has priority to be charged, and after the charging of the one of the battery pack and the built-in battery is completed, the other of the battery pack and the built-in battery is charged.

According to an example of the present disclosure, the energy storage device further includes:
a control key, where the control key is configured to selectively control whether to couple the battery pack to the inverter.

According to an example of the present disclosure, when the control key controls the battery pack not to be coupled to the inverter, the built-in battery is configured to simultaneously supply output electrical power to the battery pack and the inverter for charging the battery pack and for the inverter to invert the output electrical power to output the alternating current.

According to an example of the present disclosure, when the control key controls the battery pack to be coupled to the inverter, the battery pack is configured to supply output electrical power to the inverter for the inverter to invert the output electrical power to output the alternating current.

According to an example of the present disclosure, when the battery pack and the built-in battery are coupled to the inverter, the built-in battery has priority to output electrical power for the inverter to output the alternating current, and when a voltage of the built-in battery decreases to a low-voltage protection threshold, switching is performed to allow the battery pack to output electrical power for the inverter to output the alternating current.

According to an aspect of the present disclosure, the present disclosure provides an energy storage device, including:
a built-in battery, a power transmitter, and a housing, where
the power transmitter is configured to be connected to an external power supply to obtain electrical power for the energy storage device, the built-in battery is circuit-connected to the power transmitter to be charged and discharged through the power transmitter, and the power transmitter is configured to be connected to a load to supply electrical power to the load;
the built-in battery and the power transmitter are mounted in the housing;
where the energy storage device further includes:
   a battery pack, where the battery pack is detachably mounted at the housing and is circuit-connected to the power transmitter to be charged by the energy storage power supply, where when the built-in battery and the battery pack are to be charged, the battery pack has priority to be charged over the built-in battery.

According to an example of the present disclosure, the power transmitter is connected to the external power supply, and the energy storage device is in a powered state, and when it is detected that the built-in battery and the battery pack are to be charged, the power transmitter gives priority to converting electrical power from the external power supply into a second charge current for charging the battery pack, and after the charging of the battery pack is completed, the power transmitter converts the electrical power from the external power supply into a first charge current for charging the built-in battery.

According to an example of the present disclosure, when the energy storage device includes two or more battery packs to be charged, the two or more battery packs are sequentially charged in an ascending order of quantities of electricity of the two or more battery packs.

According to an example of the present disclosure, when the energy storage device includes two or more battery packs to be charged, the two or more battery packs are sequentially charged in a descending order of quantities of electricity of the two or more battery packs.

According to an example of the present disclosure, when the energy storage device includes two or more battery packs to be charged, the two or more battery packs are charged simultaneously until the charging of the two or more battery packs is completed.

According to an example of the present disclosure, when the energy storage device includes two or more battery packs to be charged, the two or more battery packs are charged alternately until the charging of the two or more battery packs is completed.

According to an example of the present disclosure, the power transmitter is not connected to the external power supply, and the energy storage device is in an unpowered state, and the built-in battery provides a discharge current to supply electrical power to the load connected to the power transmitter, where the battery pack is circuit-connected to a circuit of the energy storage device, and the built-in battery and the battery pack are connected in a capacity-combined manner to supply electrical power to the load.

According to an example of the present disclosure, the energy storage device is provided with a capacity-combining control key, the battery pack is circuit-connected to the power transmitter and is circuit-connected to the capacity-combining control key, and the capacity-combining control key is operable to control the respective battery pack to be connected to the built-in battery in the capacity-combined manner.

According to an example of the present disclosure, after the battery pack and the built-in battery are connected in the capacity-combined manner, the built-in battery first releases a current, the current is converted by the power transmitter into the discharge current to supply the electrical power to the load, and after the discharging of the built-in battery is completed, switching is performed to allow the battery pack to discharge electricity, and the electricity is converted by the power transmitter into the discharge current to continue to supply the electrical power to the load to prolong a discharge time of the energy storage device.

According to an example of the present disclosure, when the built-in battery is discharged to a voltage of 0 V, the discharging of the built-in battery is completed, and switching is performed to allow the battery pack to discharge the electricity.

According to an example of the present disclosure, when the built-in battery is discharged to a voltage lower than a first low-voltage threshold, the discharging of the built-in battery is completed, the built-in battery enters a low-voltage protection state, and switching is performed to allow the battery pack to discharge the electricity.

According to an example of the present disclosure, after the battery pack and the built-in battery are connected in the capacity-combined manner, one with a higher voltage of the battery pack and the built-in battery is first discharged, and after the battery pack and the built-in battery reach a voltage-equalized state, the battery pack and the built-in battery jointly discharge electricity, the electricity is converted by the power transmitter into the discharge current to supply the electrical power to the load.

According to an example of the present disclosure, after the battery pack and the built-in battery are connected in the capacity-combined manner, the battery pack and the built-in battery jointly discharge electricity, and the electricity is converted by the power transmitter into the discharge current to supply the electrical power to the load, where after the battery pack is discharged to a voltage lower than a second low-voltage threshold, the battery pack stops discharging and enters a low-voltage protection state, and after the built-in battery is discharged to a voltage lower than a first low-voltage threshold, the built-in battery stops discharging and enters a low-voltage protection state.

According to another aspect of the present disclosure, the present disclosure provides a charging/discharging control system, configured to control charging and discharging of an energy storage device, and including:
a detection unit, where the detection unit is circuit-connected to a circuit of the energy storage device to detect electrical information of components connected in the circuit of the energy storage device, and the detection unit detects whether the energy storage device is connected to a battery pack and further detects electrical information of the battery pack;
an identification unit, where the identification unit is communicatively connected to the detection unit to identify an electricity source and an electricity demand of the energy storage device according to the electrical information detected by the detection unit;
a comparison unit, where the comparison unit is communicatively connected to the identification unit to compare the electricity source and the electricity demand and correspondingly generate a charging control instruction and/or a discharging control instruction, and when the electricity demand is to charge a built-in battery of the energy storage device and the battery pack connected to the energy storage device, the charging control instruction generated by the comparison unit includes: charging the battery pack in priority, and then charging the built-in battery after the charging of the battery pack is completed; and
a charging unit, where the charging unit is circuit-connected to the compari son unit to execute the charging control instruction.

According to an example of the present disclosure, the charging control instruction generated by the comparison unit further includes: charging two or more battery packs connected to the energy storage device according to preset charging priorities of the two or more battery packs.

According to an example of the present disclosure, the detection unit detects that a power transmitter of the energy storage device is connected to a load, the identification unit identifies that the electricity demand is to supply electrical power to the load, and the comparison unit generates the discharging control instruction according to a comparison between the electricity source identified by the identification unit and the electricity demand, where the charging/discharging control system further includes:
a discharging unit, where the discharging unit is communicatively connected to the comparison unit to execute the discharging control instruction to control the energy storage device to output a discharge current to supply the electrical power to the load.

According to an example of the present disclosure, when the detection unit detects that the battery pack is connected to the load, and the identification unit identifies that the electricity source is the built-in battery and the battery pack being available for supplying electrical power, the discharging control instruction generated by the comparison unit includes: connecting the built-in battery and the battery pack in a capacity-combined manner to output the discharge current in the capacity-combined manner to supply the electrical power to the load.

According to an example of the present disclosure, the detection unit detects that the battery pack is connected to the energy storage device, and the identification unit identifies that the battery pack is the electricity source and is available for being connected to the built-in battery in the capacity-combined manner.

According to an example of the present disclosure, the detection unit detects that a capacity-combining control key of the energy storage device is triggered, and the identification unit identifies that the battery pack controlled by the capacity-combining control key is the electricity source and is available for being connected to the built-in battery in the capacity-combined manner.

According to an example of the present disclosure, the discharging control instruction further includes an output mode of the battery pack and the built-in battery connected in the capacity-combined manner as follows: the built-in battery is discharged first, and after the discharging of the built-in battery is completed, switching is performed to allow the battery pack connected in the capacity-combined manner to discharge.

According to an example of the present disclosure, when the detection unit detects that the built-in battery is discharged to a voltage of 0 V, the discharging of the built-in battery is completed, and the discharging unit switches to the battery pack to discharge.

According to an example of the present disclosure, when the detection unit detects that the built-in battery is discharged to a voltage lower than a first low-voltage threshold, the discharging of the built-in battery is completed, and the discharging unit switches to the battery pack to discharge.

According to an example of the present disclosure, when the detection unit detects that a voltage of the battery pack is lower than a second low-voltage threshold, the discharging unit stops the discharging of the battery pack.

According to an example of the present disclosure, the discharging control instruction further includes an output mode of the battery pack and the built-in battery connected in the capacity-combined manner as follows: one with a higher voltage of the built-in battery and the battery pack is discharged first, and after the built-in battery and the battery pack reach a voltage-equalized state, the built-in battery and the battery pack jointly discharge electricity.

According to an example of the present disclosure, the identification unit identifies that two or more battery packs are the electricity source and are available for being connected to the built-in battery in the capacity-combined manner, and the discharging control instruction generated by the comparison unit further includes: after switching to the two or more battery packs to discharge, controlling the two or more battery packs to discharge according to a preset battery pack discharging order.

According to an example of the present disclosure, the preset battery pack discharging order is: sequentially controlling the two or more battery packs connected in the capacity-combined manner to discharge in a descending order of voltages of the two or more battery packs.

According to an example of the present disclosure, the preset battery pack discharging order is: sequentially controlling the two or more battery packs connected in the capacity-combined manner to discharge in an ascending order of voltages of the two or more battery packs.

According to an example of the present disclosure, the preset battery pack discharging order is: a battery pack with a highest voltage of the two or more battery packs is discharged first; when a voltage of the battery pack with the highest voltage is equal to a voltage of a battery pack with a second highest voltage of the two or more battery packs, the battery pack with the highest voltage and the battery pack with the second highest voltage jointly discharge electricity; and so on until voltages of the two or more battery packs connected in the capacity-combined manner are equal, so that the two or more battery packs jointly discharge electricity.

According to another aspect of the present disclosure, the present disclosure provides a charging/discharging control method, for controlling charging and discharging of an energy storage device, the charging/discharging control method including:
connecting a battery pack to a circuit of the energy storage device; and
detecting that a built-in battery of the energy storage device and the battery pack are to be charged, charging the battery pack in priority, and charging the built-in battery after the charging of the battery pack is completed.

According to an example of the present disclosure, two or more battery packs are charged according to preset charging priorities of the two or more battery packs.

According to an example of the present disclosure, the charging/discharging control method includes:
detecting that a load is connected to the energy storage device to request electricity;
identifying the built-in battery as an electricity source to supply electrical power to the load;
detecting that the battery pack is connected to the circuit of the energy storage device, and identifying the battery pack as the electricity source; and
connecting the battery pack and the built-in battery in a capacity-combined manner to output a discharge current in the capacity-combined manner to supply the electrical power to the load.

According to an example of the present disclosure, the charging/discharging control method includes:
detecting that the battery pack is connected to the circuit of the energy storage device when a load is connected to the energy storage device, and identifying the battery pack as the electricity source.

According to an example of the present disclosure, the charging/discharging control method includes:
operating a capacity-combining control key to control the respective battery pack to be connected to the built-in battery in a capacity-combined manner.

Compared with the prior art, the present disclosure at least has the following advantages.
1. The battery pack is detachably mounted on the energy storage power supply, and can be charged through the energy storage power supply to replenish electricity in a timely manner. The energy storage device can provide another available battery pack for the load matching the battery pack, so that the load matching the battery pack can continue to be used.
2. The battery pack can discharge through the energy storage power supply, so that the capacity of the energy storage power supply can be easily and conveniently expanded.
3. The battery pack can be selectively coupled to the energy storage power supply to output electrical power to the inverter of the energy storage power supply, and the inverter converts the electrical power to output an alternating current.
4. A charging order is set for the battery pack and the built-in battery to meet the actual usage needs. For example, the battery pack has priority to be charged over the built-in battery, so that the electrical power of the battery pack is replenished in a timely and quick manner, thereby ensuring the normal use of the battery pack in priority.
5. The battery pack and the built-in battery are connected in a capacity-combined manner to supply electrical power to the load connected to the energy storage device, to prolong the discharge time of the energy storage device or increase the discharge power of the energy storage device.

Further objectives and advantages of the present disclosure will become apparent from an understanding of the following description and the accompanying drawings.

### BRIEF DESCRIPTION OF THE DRAWINGS

FIG. 1A is a schematic diagram of a state of an energy storage device according to an embodiment of the present disclosure.
FIG. 1B is a schematic diagram of a state of an energy storage device according to an embodiment of the present disclosure.
FIG. 1C is a schematic diagram of an energy storage device viewed from another angle according to an embodiment of the present disclosure.
FIG. 1D is a schematic structural diagram illustrating interior of an energy storage device according to an embodiment of the present disclosure.
FIG. 2 is a schematic block diagram of an energy storage device according to an embodiment of the present disclosure.
FIG. 3A is a schematic diagram of an operation mode of a charging mode of an energy storage device according to an embodiment of the present disclosure.
FIG. 3B is a schematic diagram of an operation mode of a charging mode of an energy storage device according to an embodiment of the present disclosure.
FIG. 3C is a schematic diagram of an operation mode of a charging mode of an energy storage device according to an embodiment of the present disclosure.
FIG. 4A is a schematic diagram of an operation mode of a multi-function mode of an energy storage device according to an embodiment of the present disclosure.
FIG. 4B is a schematic diagram of an operation mode of a multi-function mode of an energy storage device according to an embodiment of the present disclosure.
FIG. 5A is a schematic diagram of an operation mode of a power supply mode of an energy storage device according to an embodiment of the present disclosure.
FIG. 5B is a schematic diagram of an operation mode of a power supply mode of an energy storage device according to an embodiment of the present disclosure.
FIG. 6 is a schematic diagram of a charging/discharging control system according to an embodiment of the present disclosure.
FIG. 7 and FIG. 8 are each a schematic diagram of an energy storage device according to another embodiment of the present disclosure.
FIG. 9 is a schematic diagram of a charging method of an energy storage device according to an embodiment of the present disclosure.
FIG. 10 is a schematic diagram of a discharging method of an energy storage device according to an embodiment of the present disclosure.

### DETAILED DESCRIPTION OF THE EMBODIMENTS

The following description serves to disclose the present disclosure to enable those skilled in the art to implement the present disclosure. The preferred embodiments in the following description are given by way of example only, and other modifications will be apparent to those skilled in the art. The basic principles of the present disclosure defined in the following description can be applied to other implementation schemes, modifications, improvements, equivalent schemes, and other technical schemes that do not depart from the spirit and scope of the present disclosure.

It should be understood that in the description of the present disclosure, the orientation or positional relationships indicated by the terms "longitudinal", "transverse", "upper", "lower", "front", "rear", "left", "right", "vertical", "horizontal", "top", "bottom", "inner", "outer", etc. are based on the orientation or positional relationships shown in the drawings, and are only for the convenience of describing the present disclosure and simplifying the description, rather than indicating or implying that the apparatus or element described must have a specific orientation or be constructed and operated in a specific orientation, and therefore are not to be construed as limiting the present disclosure.

### [Energy Storage Power Supply]

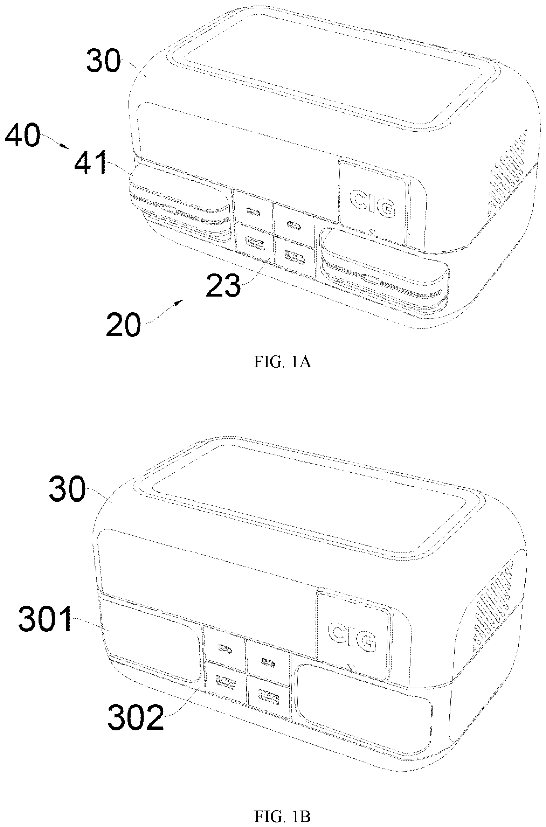

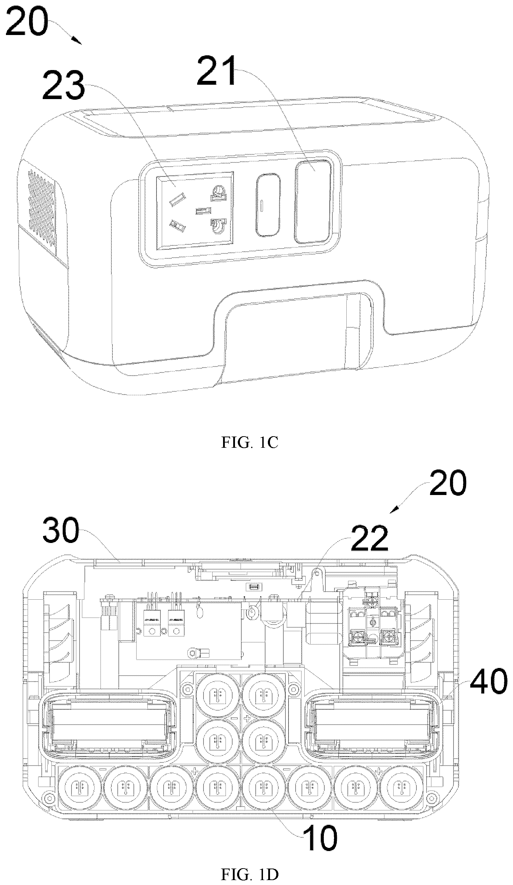

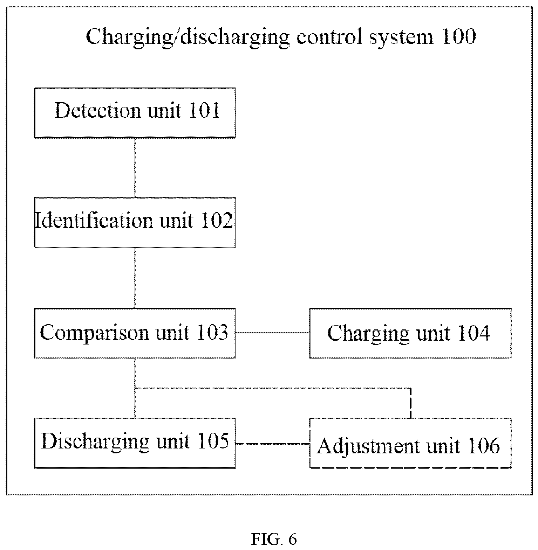

Referring to FIG. 1A to FIG. 6, the present disclosure provides an energy storage power supply, including a built-in battery 10 and a power transmitter 20. The built-in battery 10 is circuit-connected to the power transmitter 20. Current is transmitted between the built-in battery 10 and the power transmitter 20. The energy storage power supply further includes a housing 30, and the built-in battery 10 and the power transmitter 20 are arranged in the housing 30. The built-in battery 10 is circuit-connected to the power transmitter 20. The built-in battery 10 transmits a current to the power transmitter 20, and the power transmitter 20 may convert the current transmitted by the built-in battery 10, and then outputs the converted current to a load which is circuit-connected to the energy storage power supply, so as to supply electrical power to the load. In addition, the power transmitter 20 acquires a current, converts the current to a current suitable for charging the built-in battery 10, and transmits the converted current to the built-in battery 10. In other words, the built-in battery 10 may be discharged through the power transmitter 20, and may also be charged through the power transmitter 20.

Referring to FIG. 1A to FIG. 1D, the power transmitter 20 includes an input interface 21, an inverter 22, and an output interface 23. The input interface 21 and the output interface 23 are provided on the housing 30 for a user to contact and use. The inverter 22 is arranged in the housing 30.

The input interface 21 is configured to be connected to an external power supply to acquire electrical power. The inverter 22 is circuit-connected to the input interface 21 to perform a conversion process on a current inputted from the input interface 21. The output interface 23 is circuit-connected to the inverter 22 to output a current transmitted from the inverter 22. The output interface 23 outputs the current to the outside of the energy storage power supply. The load is connected to the output interface 23, and the output interface 23 transmits the current to the load. The built-in battery 10 is circuit-connected to the inverter 22, and is charged by the current from the inverter 22, or discharges electricity through the inverter 22 as a current conversion part, which is outputted through the output interface 23.

During charging of the built-in battery 10, the input interface 21 acquires electrical power from the external power supply, and the inverter 22 converts the electrical power to a first charge current, which is transmitted to the built-in battery 10 to charge.

After storing the electrical power, the built-in battery 10 may serve as an electricity source of the energy storage power supply to supply electrical power to the load connected to the energy storage power supply. The built-in battery 10 is discharged and supplies electrical power to the load. According to the electricity demand of the load, the inverter 22 may perform corresponding current conversion on the first discharge current to convert the first discharge current to a discharge current that meets the electricity demand of the load and transmit the discharge current to the load.

The current conversion includes AC-DC rectification, DC-AC inversion, and DC-DC conversion, and may also include bidirectional current conversion, such as bidirectional AC-DC conversion, bidirectional DC-DC conversion, or bidirectional inversion.

The input interface 21 may be connected to an external power supply, such as an object that supplies electrical power, e.g., mains power, a solar device, or other energy storage power supplies. The input interface 21 may acquire an alternating current, and may also acquire a direct current.

The energy storage power supply may also discharge electricity to the load connected to the energy storage power supply. The load is conductively connected to the output interface 23, and the output interface 23 outputs a current to the load. The current outputted by the output interface 23 may be from electrical power of the external power supply acquired by the input interface, or may be from the built-in battery 10 and the battery pack 40. The load may be powered by the built-in battery 10 alone, or by the built-in battery 10 and the battery pack 40 connected in a capacity-coupled manner.

After the load and the energy storage power supply successfully identify each other, i.e., it is determined that the load and the energy storage power supply can be connected, the load and the energy storage power supply are conductively connected. Alternatively, after the load is turned on by a physical switch, and the load and the energy storage power supply successfully identify each other, the load and the energy storage power supply are conductively connected. **In** other words, the load is identified as an object that can be powered by the energy storage power supply, and the load and the energy storage power supply are conductively connected, so that the energy storage power supply can discharge electricity to the load. It can be understood that a physical switch may also be arranged on the energy storage power supply to turn on the energy storage power supply, so that the energy storage power supply and the load can perform identity recognition for each other.

The output interface 23 outputs a discharge current. Further, the output interface 23 is provided with one or more output interfaces which may include an AC output interface, a DC output interface, and a cigarette lighter port. The AC output interface is configured to be connected to an AC load, and the DC output interface is configured to be connected to a DC load. **In** other words, the output interface 23 may output an AC discharge current, and may also output a DC discharge current. The load may include an AC electrical device and a DC electrical device, which respectively acquire the AC discharge current and the DC discharge current from the energy storage power supply.

### [Energy Storage Device and Battery Pack 40]

An energy storage device includes the above energy storage power supply and one or more battery packs 40. Each of the one or more battery packs 40 is detachably mounted at the housing 30. When the battery pack 40 is mounted in the housing 40, the battery pack 40 is circuit-connected to a circuit of the energy storage device.

The battery pack 40 is connected to the energy storage power supply, may be charged by the energy storage power supply, and may also serve as a power supply to discharge through the energy storage power supply, to expand the capacity of the energy storage power supply and prolong the discharge time of the energy storage power supply. The mode of connection between the battery pack 40 and the energy storage power supply may be a cordless coupling connection, a wireless connection, and/or a corded connection.

Preferably, the battery pack 40 is connected to the energy storage power supply by cordless coupling. **In** some examples, the housing 30 is provided with an interface configured to be circuit-connected to the battery pack 40. Optionally, the interface is implemented as an interface for cordless coupling connection; the interface is implemented as a wireless charging interface; or the interface is implemented as a corded connection interface. Preferably, the interface is implemented as a cordless coupling interface, so that the battery pack 40 is circuit-connected to the circuit of the energy storage power supply by cordless coupling.

Optionally, the battery pack 40 is at least partially or entirely received in the housing 30. Optionally, the battery pack 40 is arranged on an outer side of the housing 30, e.g., arranged on the top of the housing 30. Optionally, the battery pack 40 is arranged on an outer peripheral surface of the housing 30.

The battery pack 40 is further provided with a power transmission interface, which may output electrical power stored in the battery pack 40 to the outside. Generally, the power transmission interface transmits a direct current. Optionally, when the battery pack 40 is connected to the energy storage power supply, the power transmission interface is at least partially blocked, and therefore is in a disabled state. Optionally, when the battery pack 40 is connected to the energy storage power supply, the power transmission interface is disabled.

The battery pack 40 may independently release a current to supply electrical power to a load that can be powered by the battery pack 40. When the battery pack 40 is disconnected from the matching load and is mounted on the energy storage power supply for charging, another battery pack 40 in the energy storage device may be selected to continue to supply electrical power to the load matching the battery pack.

Optionally, the battery pack 40 is inserted into the energy storage power supply, and is conductively connected to the energy storage power supply. Further, the battery pack 40 is conductively connected to the built-in battery 10, and/or the battery pack 40 is conductively connected to the power transmitter 20.

The housing of the energy storage power supply is provided with a mounting part, and the built-in battery 10 and the inverter 22 are arranged in the housing without interfering with the mounting part. The mounting part includes an interface, which does not interfere with the built-in battery 10 and the inverter 22.

The battery pack 40 is freely detachably connected to the mounting part. The battery pack 40 includes a power output port configured to be mechanically and electrically connected to the interface. In other words, a mechanical connection and an electrical connection are formed between the battery pack 40 and the energy storage power supply through the connection of the power output port and the interface.

In an example of mounting of the battery pack 40 and the energy storage power supply, at least one accommodating cavity 301 is provided in the housing 30. Each of the at least one accommodating cavity 301 is configured to mount the battery pack 40. The cavity 301 is provided therein with an interface configured to be connected to the battery pack 40. The interface is configured to be conductively connected to the battery pack 40, to implement current transmission between the battery pack 40 and the energy storage power supply. Further, the interface is connected to the circuit of the energy storage power supply, and the battery pack 40 is connected to the circuit of the energy storage power supply through the interface, and is conductively connected to the circuit of the energy storage power supply. The battery pack 40 is provided with a power output port, which is conductively connected to the interface. The battery pack 40 may acquire electrical power from the energy storage power supply through the power output port, so as to be charged by the energy storage power supply. The battery pack 40 may also discharge electricity to the energy storage power supply, and serve as a capacity expansion device for the energy storage power supply, to expand the capacity of the energy storage power supply and prolong the discharge time of the energy storage power supply.

Optionally, the accommodating cavity 301 is configured to receive the battery pack 40, so that the battery pack 40 is accommodated in the housing 30.

The housing 30 has an outer surface 302, and the accommodating cavity 301 concavely extends inward from part of the outer surface 302.

Optionally, the accommodating cavity 301 is arranged next to the built-in battery 10, i.e., close to the built-in battery 10, and an opening of the accommodating cavity 301 is located on a surface of the housing 30. The size of the accommodating cavity 301 is configured to accommodate the battery pack 40. Optionally, the battery pack 40 has an outer peripheral surface 41, and after the battery pack 40 is accommodated in the accommodating cavity 301, at least a part of the outer peripheral surface 41 of the battery pack 40 is blocked by the accommodating cavity 301.

In addition, optionally, the battery pack 40 and the energy storage power supply perform identity recognition for each other, e.g., perform handshake communication. When the handshake communication is successful, the battery pack 40 is circuit-connected to the circuit of the energy storage power supply.

After the battery pack 40 is connected to the circuit of the energy storage power supply, the battery pack 40 may be charged by the energy storage power supply. The battery pack 40 is circuit-connected to the circuit of the energy storage power supply by a charging branch. The energy storage power supply releases a second charge current to the battery pack 40 through the charging branch.

When the battery pack 40 is configured for the energy storage power supply, the battery pack 40 at least has two different operation states including a first operation state and a second operation state. In the first operation state, the battery pack 40 is charged by electrical power from the energy storage power supply through the mechanical and electrical connection between the power output port and the interface. **In** the second operation state, the battery pack 40 and the built-in battery 10 are coupled to the inverter 22 through the mechanical and electrical connection between the power output port and the interface, in order to output an alternating current through the output interface 23.

In the first operation state, the battery pack 40 is charged by the energy storage power supply. In the second operation state, the battery pack 40 discharges, and outputs a current through the energy storage power supply. In particular, the energy storage power supply is provided with the inverter 22, which may convert a direct current outputted by the battery pack 40 to an alternating current, and output the alternating current through the output interface 23.

In the first operation state, the battery pack 40 at least includes two charging modes including a first charging mode and a second charging mode. In the first charging mode, when the input interface 21 is connected to an external power supply for charging, the battery pack 40 is charged by electrical power from the external power supply through the mechanical and electrical connection between the power output port and the interface. In the second charging mode, when the input interface 21 is not connected to an external power supply for charging, the battery pack 40 is charged by electrical power from the built-in battery 10 through the mechanical and electrical connection between the power output port and the interface.

When the input interface 21 is connected to an external power supply for charging, one of the battery pack 40 and the built-in battery 10 has priority to be charged, and after the charging of the one of the battery pack 40 and the built-in battery 10 is completed, the other of the battery pack 40 and the built-in battery 10 is charged.

The battery pack 40 may be selectively coupled to the inverter to enter the second operation state. The energy storage device further includes a control key configured to selectively control whether to couple the battery pack to the inverter 22.

When the control key controls the battery pack 40 not to be coupled to the inverter 22, the built-in battery 10 is configured to simultaneously supply output electrical power to the battery pack 40 and the inverter 22 for charging the battery pack 40 and for the inverter 22 to invert the output electrical power to output the alternating current.

When the control key controls the battery pack 40 to be coupled to the inverter 22, the battery pack 40 is configured to supply output electrical power to the inverter 22 for the inverter 22 to invert the output electrical power to output the alternating current.

When the battery pack 40 and the built-in battery 10 are respectively coupled to the inverter 22, the built-in battery 10 has priority to output electrical power for the inverter to output the alternating current, and when a voltage of the built-in battery 10 decreases to a low-voltage protection threshold, switching is performed to allow the battery pack 40 to output electrical power for the inverter 22 to output the alternating current.

In particular, the battery pack 40 and the built-in battery 10 have the same rated voltage to be suitable for coupling to the inverter 22.

### [Operation mode of Energy Storage Device]

According to an aspect of the present disclosure, the energy storage device has a plurality of operation modes, including but not limited to a charging mode, a power supply mode, a multi-function mode, etc. The energy storage device determines to operate in an operation mode according to an electricity demand.

When operating in the charging mode to charge the built-in battery 10 and/or the battery pack 40, the energy storage device only releases a charge current to the built-in battery 10 and/or the battery pack 40. When operating in the power supply mode to supply electrical power to the connected load, the energy storage device only releases a discharge current to the connected load. When operating in the multi-function mode, the energy storage device can charge the built-in battery 10 and/or the battery pack 40, and supply electrical power to the connected load, i.e., the energy storage device simultaneously performs charging and discharging, to release a charge current and a discharge current.

Specifically, when operating in the charging mode, the energy storage device may charge the built-in battery 10, the battery pack 40 and/or the built-in battery 10 and the battery pack 40 according to an actual situation. If the quantity of electricity of the built-in battery 10 is insufficient, the energy storage device may transmit a first charge current to the built-in battery 10 to charge the built-in battery 10. If the battery pack 40 is circuit-connected to the circuit of the energy storage power supply and requests to be charged, the energy storage device may transmit a second charge current to the battery pack 40 to charge the battery pack 40. When the quantity of electricity of the built-in battery 10 is insufficient, and there is a battery pack 40 requesting to be charged, the energy storage device charges the built-in battery 10 and the battery pack 40.

When operating in the power supply mode, the energy storage device may release a corresponding discharge current according to the electricity demand of the connected load to supply electrical power to the load. In other words, when the electricity demand is to supply electrical power to the load, the energy storage device operates in the power supply mode.

When operating in the multi-function mode, the energy storage device may simultaneously release a charge current and a discharge current to respectively charge the built-in battery 10 and/or the battery pack 40, and supply electrical power to the load.

When detecting that the battery pack 40 is circuit-connected to the circuit of the energy storage device and requests to be charged, the energy storage device operates in the charging mode. If further detecting that the load is connected to the energy storage device and requests supply of electrical power, the energy storage device switches to the multi-function mode. When only the load is connected to the energy storage device and requests supply of electrical power, the energy storage device switches to the power supply mode.

### [Powered/Unpowered State of Energy Storage Device]

According to another aspect of the present disclosure, according to the state of the energy storage device, the electricity source of the charge current and/or the discharge current in different operation modes is determined. Depending on whether the energy storage device is connected to an external power supply, it is defined that the energy storage device has a powered state and an unpowered state. When the energy storage device is connected to an external power supply and acquires electrical power from the external power supply, the energy storage device is in the powered state. When the energy storage device is not connected to an external power supply and does not acquire electrical power from outside the energy storage device, the energy storage device is in the unpowered state.

Specifically, when the energy storage device is in the powered state, the charge current and/or the discharge current is preferably from the external power supply, and optionally, from the built-in battery 10 and/or the battery pack 40. In this case, the energy storage device may operate in the charging mode, the power supply mode, and/or the multi-function mode. When the energy storage device is in the powered state, electrical power from the external power supply is converted in priority to a first charge current, a second charge current, and/or a discharge current to supply electrical power to the built-in battery 10, the battery pack 40, and/or the load.

When the energy storage device is in the unpowered state and does not acquire electrical power from the external power supply, the charge current and/or the discharge current is optionally from the built-in battery 10 and/or the battery pack 40. In this case, the energy storage device may operate in the charging mode, the power supply mode, and/or the multi-function mode. The built-in battery 10 may discharge electricity, which is converted to a second charge current and/or a discharge current, to charge the battery pack 40 and/or supply electrical power to the load.

The battery pack 40 may discharge electricity, which is converted to a discharge current to supply electrical power to the load. The battery pack 40 may discharge through the energy storage device and serve as an electricity source of the discharge current of the energy storage device, and may be connected to the built-in battery 10 in a capacity-combined manner to output a discharge current, to prolong the discharge time of the energy storage device and/or increase the discharge power of the energy storage device.

### [Implementations of Charging]

A scenario in which the battery pack 40 is in the first operation state after being configured for the energy storage power supply, i.e., an implementation in which the battery pack 40 is charged by electrical power from the energy storage power supply through the mechanical and electrical connection between the power output port and the interface, will be described first.

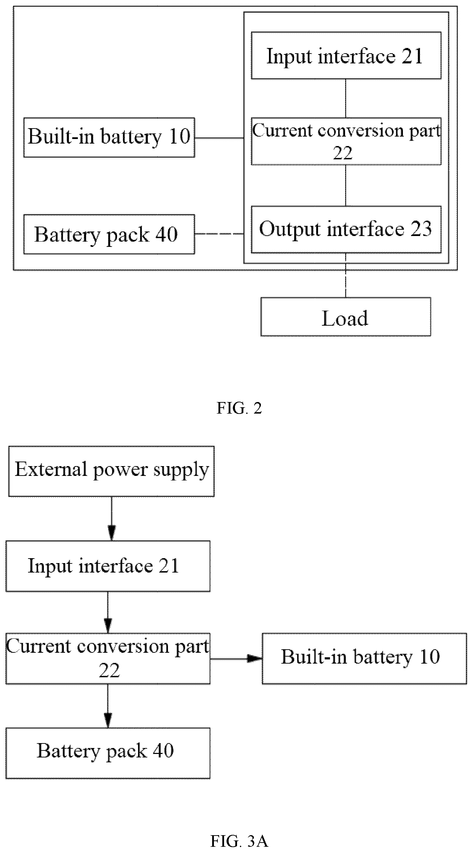

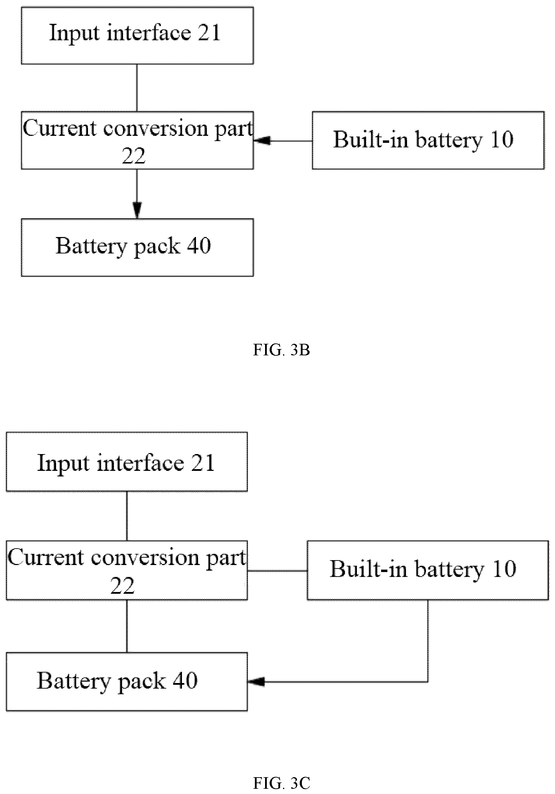

An implementation in which the energy storage device charges the built-in battery 10 and the battery pack 40 is described with reference to FIG. 3A to FIG. 3C. When only the built-in battery 10 needs to be charged, the built-in battery 10 is charged. When the built-in battery 10 and the battery pack 40 need to be charged, charging is performed according to preset charging priorities of the built-in battery 10 and the battery pack 40.

In a preferred embodiment of the present disclosure, the charging priorities of the built-in battery 10 and the battery pack 40 are as follows. The battery pack 40 has priority to be charged over the built-in battery 10. When the battery pack 40 is circuit-connected to the energy storage device and requests to be charged, the battery pack 40 is charged. When the built-in battery 10 and the battery pack 40 need to be charged, the battery pack 40 has priority to be charged. After the charging of the battery pack 40 is completed, the built-in battery 10 is charged.

Specifically, it is detected whether the built-in battery 10 needs to be charged, and it is detected whether there is a battery pack 40 requesting to be charged. If it is detected that the built-in battery 10 needs to be charged and there is a battery pack 40 requesting to be charged, a second charge current is first released to the battery pack 40. It is detected whether the charging of the battery pack 40 is completed. If the charging of the battery pack 40 is completed, the release of the second charge current is stopped, and then a first charge current is released to the built-in battery 10 to charge the built-in battery 10.

In an implementation of detecting whether the built-in battery 10 and the battery pack 40 need to be charged, when it is detected that the quantity of electricity of the built-in battery 10 is lower than a first charging threshold, it is determined that the built-in battery 10 needs to be charged; and when it is detected that the quantity of electricity of the battery pack 40 is lower than a second charging threshold, it is determined that the battery pack 40 needs to be charged. In another implementation, when the quantity of electricity of the built-in battery 10 does not reach a rated capacity value, it is determined that the built-in battery 10 needs to be charged, i.e., it is determined that the built-in battery 10 needs to be charged when the quantity of electricity of the built-in battery 10 is insufficient; and when the quantity of electricity of the battery pack 40 does not reach a rated capacity value, it is determined that the battery pack 40 needs to be charged, i.e., it is determined that the battery pack 40 needs to be charged when it is detected that the quantity of electricity of the battery pack 40 is insufficient.

When it is detected that a battery pack 40 is connected to the circuit of the energy storage device and requests to be charged, the battery pack 40 has priority to be charged, and after the charging of the battery pack 40 is completed, the built-in battery 10 that needs to be charged is charged. When it is detected that two or more battery packs 40 are connected to the circuit of the energy storage device and request to be charged, the two or more battery packs 40 have priority to be charged, and after the charging of the two or more battery packs 40 is completed, the built-in battery 10 that needs to be charged is charged.

Further, a method of charging the two or more battery packs 40, i.e., a method of setting a battery pack charging order, will be described. In an example, the battery pack with a lowest voltage of the two or more battery packs 40 has priority to be charged; after the battery pack with the lowest voltage is fully charged, the battery pack with a lowest voltage of the remaining battery packs 40 is fully charged; and so on until the charging of the two or more battery packs 40 requesting to be charged is completed. In an example, the battery pack with a highest voltage of the two or more battery packs 40 has priority to be charged; after the battery pack with the highest voltage is fully charged, the battery pack with a highest voltage of the remaining battery packs 40 is fully charged; and so on until the charging of the two or more battery packs 40 requesting to be charged is completed. In an example, the battery pack(s) other than the battery pack with a highest voltage of the two or more battery packs 40 has/have priority to be charged until the voltages of the two or more battery packs 40 requesting to be charged are the same, and then the two or more battery packs 40 are charged simultaneously until the charging of the two or more battery packs 40 is completed. In an example, the two or more battery packs 40 are alternately charged until the charging of the two or more battery packs 40 requesting to be charged is completed.

In some other examples of the present disclosure, the built-in battery 10 has priority to be charged, and after the charging of the built-in battery 10 is completed, the battery pack 40 is charged. In some other examples of the present disclosure, the built-in battery 10 and the battery pack 40 are simultaneously charged.

In some other examples of the present disclosure, charging is performed according to a preset charging order of the built-in battery 10 and the battery pack 40.

In an implementation, one with a lowest voltage of the built-in battery 10 and the battery pack(s) 40 has priority to be charged, and after the charging is completed, one with a lowest voltage of the remaining built-in battery 10 and/or battery pack(s) 40 is charged, and so on until the charging of the built-in battery 10 and the battery pack(s) 40 is completed. In other words, one requiring a longer initial expected charging time of the built-in battery 10 and the battery pack(s) 40 has priority to be charged.

In an implementation, one with a highest voltage of the built-in battery 10 and the battery pack(s) 40 has priority to be charged, and after the charging is completed, one with a highest voltage of the remaining built-in battery 10 and/or battery pack(s) 40 is charged, and so on until the charging of the built-in battery 10 and the battery pack(s) 40 is completed. In other words, one requiring a shorter expected charging time of the built-in battery 10 and the battery pack(s) 40 has priority to be charged.

In an implementation, one with a lower voltage of the built-in battery 10 and the battery pack 40 has priority to be charged, and when the voltages of the built-in battery 10 and the battery pack 40 requesting to be charged become the same, the built-in battery 10 and the battery pack 40 are simultaneously charged until the charging is completed. In other words, one requiring a longer real-time expected charging time of the built-in battery 10 and the battery pack 40 has priority to be charged, and when the real-time expected charging time of the built-in battery 10 is the same as that of the battery pack 40, the built-in battery 10 and the battery pack 40 are simultaneously charged.

In an implementation, the built-in battery 10 and the battery pack 40 are alternately charged until the charging of the built-in battery 10 and the battery pack 40 is completed.

In the present disclosure, the expression "the charging is completed" includes a case where the voltage reaches a rated voltage of the device, i.e., the device is fully charged, for example, the voltage of the built-in battery 10 reaches a rated voltage of the built-in battery 10, i.e., the built-in battery 10 is fully charged; or the voltage of the battery pack 40 reaches a rated voltage of the battery pack 40, i.e., the battery pack 40 is fully charged. The expression "the charging is completed" also includes a case where the object to be charged is disconnected from the energy storage device, for example, the battery pack 40 is disconnected from the energy storage device during charging.

It can also be understood that when both the built-in battery 10 and the battery pack 40 need to be charged, the energy storage device is preferably in the powered state, or switches from the unpowered state to the powered state, i.e., the energy storage device is connected to an external power supply to acquire electrical power from outside the energy storage device to charge the built-in battery 10 and the battery pack 40.

In some other examples of the present disclosure, when the energy storage device is in the unpowered state, the battery pack 40 may be used to charge the built-in battery 10 and the battery pack 40 that needs to be charged, and the built-in battery 10 may be used to charge the battery pack 40.

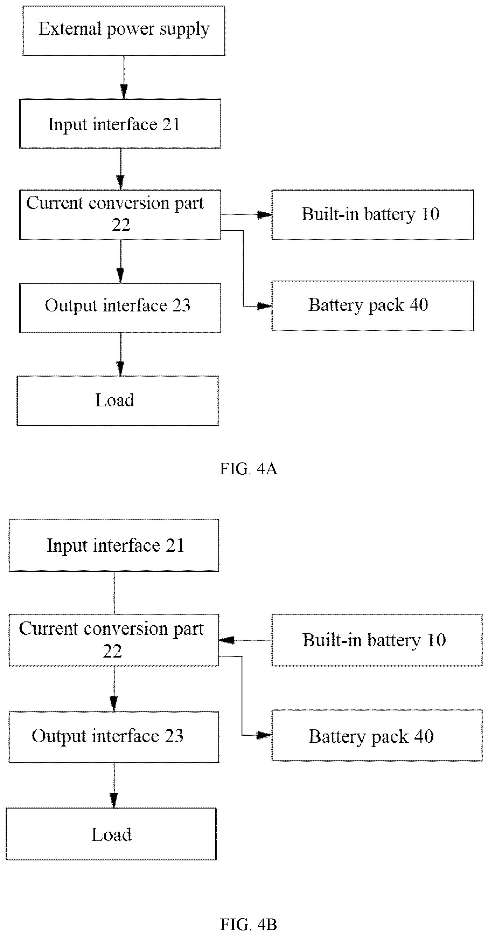

Referring to FIG. 4A and FIG. 4B, when operating in the multi-function mode, the energy storage device releases a discharge current and a charge current to respectively supply electrical power to the load and charge the built-in battery 10 and/or the battery pack 40.

As shown in FIG. 4A, when operating in the multi-function mode, the energy storage device in the powered state gives priority to converting electrical power from the external power supply to a charge current and a discharge current. The power transmitter 20 acquires electrical power from the external power supply through the input interface 21, and the inverter 22 converts the electrical power to a charge current and a discharge current, to simultaneously supply electrical power to the built-in battery 10 and/or the battery pack 40, and the load.

As shown in FIG. 4B, when operating in the multi-function mode, the energy storage device in the unpowered state converts electrical power stored in the built-in battery 10 into a second charge current and a discharge current to charge the battery pack 40 and supply electrical power to the load, respectively. In some other examples of the present disclosure, the battery pack 40 and the built-in battery 10 are connected in a capacity-combined manner, and the inverter 22 converts electrical power from the battery pack 40 into a charge current and a discharge current. The electrical power of the battery pack 40 may be converted to a first charge current to charge the built-in battery 10, may be converted to a second charge current to charge other battery packs 40 that request to be charged, and may be converted to a discharge current to supply electrical power to the load.

In particular, when the input interface 21 is not connected to an external power supply, the control key is configured to control whether to couple the battery pack 40 to the inverter 22, to control whether the battery pack 40 is discharged through the energy storage power supply.

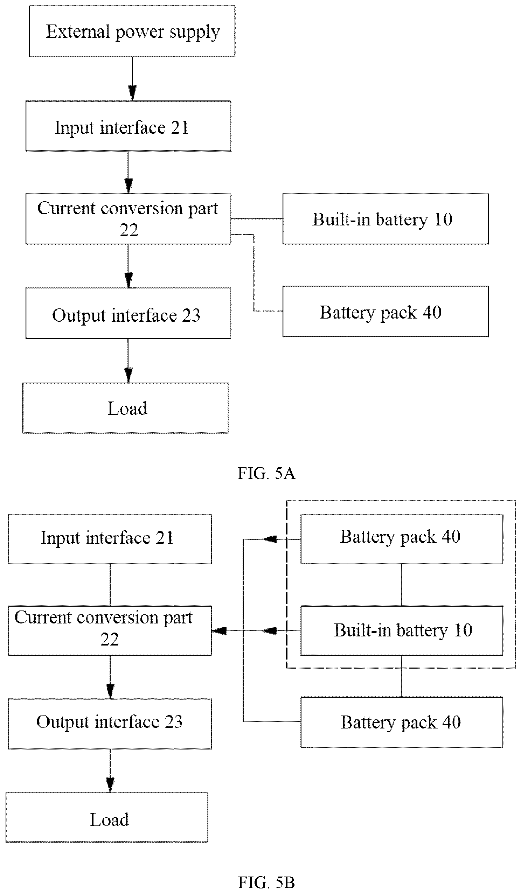

Referring to FIG. 5A and FIG. 5B, when the energy storage device only supplies electrical power to the load, the energy storage device operates in the power supply mode. A method of providing a discharge current in the power supply mode will be further described.

As shown in FIG. 5A, when operating in the power supply mode, the energy storage device in the powered state gives priority to converting electrical power from the external power supply to a discharge current to supply electrical power to the load. The inverter 22 converts the electrical power acquired by the input interface 21 to a discharge current, which is transmitted through the output interface 23 to the load circuit-connected to the energy storage power supply, to supply electrical power to the load.

As shown in FIG. 5B, when operating in the power supply mode, the energy storage device in the unpowered state converts electrical power stored in the built-in battery 10 to a discharge current to supply electrical power to the load. The inverter 22 converts the electrical power from the built-in battery 10 to a discharge current, which is transmitted through the output interface 23 to the load circuit-connected to the energy storage power supply, to supply electrical power to the load. When the battery pack 40 is circuit-connected to the circuit of the energy storage device, the battery pack 40 and the built-in battery 10 may be connected in a capacity-combined manner, to release a discharge current to supply electrical power to the load. The inverter 22 converts the electrical power from the battery pack 40 to a discharge current, which is transmitted through the output interface 23 to the load circuit-connected to the energy storage power supply, to supply electrical power to the load.

In particular, the control key is configured to control whether to couple the battery pack 40 to the inverter 22. When the control key controls the battery pack 40 not to be coupled to the inverter 22, the built-in battery 10 supplies output electrical power to the load. When the control key controls the battery pack 40 to be coupled to the inverter 22, the battery pack 40 is configured to supply output electrical power to the load, in which case the energy storage device is in the second operation state. When the load is an AC load, the inverter 22 may convert the output electrical power into an alternating current and output the alternating current to the AC load.

When the battery pack 40 and the built-in battery 10 are coupled to the inverter 22, the built-in battery 10 has priority to output electrical power, and when the voltage of the built-in battery decreases to a low-voltage protection threshold, switching is performed to allow the battery pack 40 to output electrical power.

Further, implementations of the connection of the battery pack 40 and the built-in battery 10 in a capacity-combined manner will be described. In the present disclosure, connection in a capacity-combined manner means that the battery pack 40 may discharge through the energy storage device, and serve as an electricity source of the energy storage device together with the built-in battery 10 to supply electrical power to the load connected to the energy storage device. In some cases, the battery pack 40 may also discharge electricity to charge the built-in battery 10.

In an implementation, if it is detected that the battery pack 40 is connected, i.e., a capacity-combining connection signal is triggered, the battery pack 40 and the built-in battery 10 are connected in a capacity-combined manner, to provide a discharge current to supply electrical power to the load. In an implementation, when there is a load connected to the energy storage device in a state in which the battery pack 40 is mounted on the energy storage device, i.e., a capacity-combining connection signal is triggered, the battery pack 40 and the built-in battery 10 are connected in a capacity-combined manner, to supply electrical power to the load.

In an implementation, the energy storage power supply is provided with a capacity-combining control key, which controls whether to connect the battery pack 40 to the built-in battery 10 in a capacity-combined manner. The capacity-combining control key is connected to the interface so as to be conductively connected to the battery pack 40, to control whether the battery pack 40 can be connected in a capacity-combined manner to release a discharge current.

The user operates the capacity-combining control key to select whether to connect the battery pack 40 to the built-in battery 10 in a capacity-combined manner. As such, the user can freely select whether to connect the battery pack 40 to the built-in battery 10 in a capacity-combined manner according to needs. According to the user's operation on the capacity-combining control key, a capacity-combining connection signal is sent to control the respective battery pack 40 selected by the user to be connected to the built-in battery 10 in a capacity-combined manner.

Optionally, one capacity-combining control key is arranged to control whether to connect the battery pack 40 to the built-in battery 10 in a capacity-combined manner. Optionally, two or more capacity-combining control keys are arranged to respectively control whether to connect two or more battery packs 40 to the built-in battery 10 in a capacity-combined manner, i.e., the two or more battery packs 40 are respectively provided with the two or more capacity-combining control keys, and each of the two or more capacity-combining control keys may be connected to the interface so as to be connected to the respective battery pack 40, to control whether to connect the respective battery pack 40 and the built-in battery 10 in a capacity-combined manner.

Optionally, the capacity-combining control key is implemented as a switch operation key having a selected state and a non-selected state. In the selected state, the battery pack 40 corresponding to the capacity-combining control key can be connected to the built-in battery 10 in a capacity-combined manner. In the non-selected state, the battery pack 40 corresponding to the capacity-combining control key cannot be connected to the built-in battery 10 in a capacity-combined manner. Further optionally, the capacity-combining control key is arranged on the battery pack 40 to correspondingly control whether to connect the battery pack 40 in a capacity-combined manner. Further optionally, the capacity-combining control key is arranged on the energy storage device to control whether to connect the battery pack 40 in a capacity-combined manner.

Optionally, the capacity-combining control key is implemented as a screen, and the user performs operations on the screen to select whether to connect a battery pack 40 and the built-in battery 10 in a capacity-combined manner, and select the battery pack 40 to be connected to the built-in battery 10 in a capacity-combined manner.

Next, implementations of the output of the battery pack 40 and the built-in battery 10 connected in a capacity-combined manner will be described.

Preferably, after the battery pack 40 and the built-in battery 10 are connected in a capacity-combined manner, the built-in battery 10 is discharged first, and when the discharging of the built-in battery 10 is completed, the battery pack 40 is discharged to continuously provide a discharge current to the load.

If two or more battery packs 40 are connected to the energy storage device and are connected to the built-in battery 10 in a capacity-combined manner for output, the battery packs 40 release a discharge current one by one after the discharging of the built-in battery 10 is completed.

Optionally, the expression "the discharging of the built-in battery 10 is completed" is defined as a case where the built-in battery 10 is discharged to a voltage of 0 V. Optionally, the expression "the discharging of the built-in battery 10 is completed" is defined as a case where the built-in battery 10 is discharged to a voltage lower than a preset first low-voltage threshold. In this case, the built-in battery 10 enters a low-voltage protection state and is prohibited from discharging. In other words, the built-in battery 10 is provided with a low-voltage protection mechanism to prevent the voltage of the built-in battery 10 from being too low and affecting normal use.

Optionally, a second low-voltage threshold is set for the battery pack 40, and when the battery pack 40 is discharged to a voltage lower than the second low-voltage threshold, the discharging of the battery pack 40 is completed, so the battery pack 40 stops discharging and enters a low-voltage protection state.

Further, a condition under which the battery pack 40 can be connected to the built-in battery 10 in a capacity-combined manner is set, so that the battery pack 40 can be selectively connected to the built-in battery 10 in a capacity-combined manner depending on whether the condition is satisfied. The battery pack 40 with a voltage higher than a battery pack discharge threshold may be selected to be connected to the built-in battery 10 in a capacity-combined manner. In other words, only the battery pack 40 with a certain quantity of electricity can be selected to be connected to the built-in battery 10 in a capacity-combined manner. The battery pack discharge threshold is higher than the second low-voltage threshold of the battery pack.

As the main electricity source of the energy storage device, the built-in battery 10 has priority to release a discharge current to supply electrical power to the load. The battery pack 40 may serve as a supplementary electricity source of the energy storage device, and be connected to the built-in battery 10 in a capacity-combined manner to supply electrical power to the load. Therefore, by controlling the built-in battery 10 in priority to release the discharge current, when the quantity of electricity of the built-in battery 10 is insufficient to meet the electricity demand of the load, the battery pack 40 connected in a capacity-combined manner can release a discharge current to continue to supply electrical power to the load. In addition, since the electrical power of the built-in battery 10 is released in priority, the consumption of the electrical power of the battery pack 40 can be avoided when the quantity of electricity of the built-in battery 10 is sufficient to meet the electricity demand of the load.

In some other examples of the present disclosure, the output of the battery pack 40 and the built-in battery 10 connected in a capacity-combined manner is implemented as follows: sequentially discharging according to a preset discharging order.

In an implementation, the preset discharging order is implemented as: sequentially controlling the battery pack 40 and the built-in battery 10 to discharge in a descending order of voltages. In an implementation, the preset discharging order is implemented as: sequentially controlling the battery pack 40 and the built-in battery 10 to discharge in an ascending order of voltages.

Optionally, the timing at which the discharging entity is switched sequentially is implemented to be the time when the built-in battery 10 and/or the battery pack 40 are/is discharged to a voltage of 0 V. Optionally, the timing at which the discharging entity is switched sequentially is implemented to be the time when the built-in battery 10 is discharged to a voltage lower than the first low-voltage threshold and/or the battery pack 40 is discharged to a voltage lower than the second low-voltage threshold.

In some other examples of the present disclosure, the output of the battery pack 40 and the built-in battery 10 connected in a capacity-combined manner is implemented as follows: one having a higher voltage of the battery pack 10 and the built-in battery 40 discharging first; and after the battery pack 10 and the built-in battery 40 reach a voltage-equalized state, the battery pack 10 and the built-in battery 40 jointly discharging.

### [Configuration of Charging Circuit]

The configuration of the charging circuit of the energy storage device will be described from another point of view of the present disclosure. The power output port of the battery pack 40 is circuit-connected to the interface of the energy storage device, i.e., the battery pack 40 is circuit-connected to the circuit of the energy storage device. The battery pack 40 may acquire electrical power from the energy storage device through the circuit connection between the power output port and the interface, so as to be charged.

In an example of the present disclosure, a second charging branch is arranged between the interface and the input interface 21, i.e., the second charge current outputted by the interface is from the electrical power of the external power supply acquired by the input interface 21.

The inverter 22 is circuit-connected to the second charging branch between the interface and the input interface 21 to convert the electrical power from the external power supply acquired by the input interface 21 to the second charge current.

In an example of the present disclosure, a second charging branch is arranged between the interface and the built-in battery 10, i.e., the second charge current outputted by the interface is from the built-in battery 10. The built-in battery 10 discharges electricity as the second charge current to charge the battery pack 40.

The inverter 22 is circuit-connected to the second charging branch between the interface and the built-in battery 10 to convert the electrical power outputted by the built-in battery 10 to the second charge current.

In an example of the present disclosure, a second charging branch is arranged between the built-in battery 10 and the interface, and the second charge current flows through the built-in battery 10 and then flows into the battery pack 40.

In addition, a first charging branch is arranged between the input interface 21 and the built-in battery 10, so that the input interface 21 acquires electrical power from the external power supply, and the inverter 22 converts the electrical power to a first charge current to charge the built-in battery 10.

### [Charging/discharging Control System 100]

An energy storage device is provided with a charging/discharging control system 100. The charging/discharging control system 100 is configured to control charging and discharging of the energy storage device and includes a detection unit 101, an identification unit 102, a comparison unit 103, a charging unit 104, and a discharging unit 105.

The detection unit 101 is circuit-connected to a circuit of the energy storage device to detect a state of the circuit, components in the circuit, and information of the components. The components include a built-in battery 10, an input interface 21, a current converter 22, an output interface 23, a battery pack 40, a load, etc. The detection unit 101 detects and acquires electrical information of the components.

The detection unit 101 detects electrical information of the built-in battery 10, such as rated voltage, capacity, real-time voltage, etc.; detects whether the input interface 21 is in a powered state or an unpowered state, such as whether the input interface 21 is connected to an external power supply, a current type of electrical power acquired, etc.; and detects a connection status of the output interface 23, e.g., detects whether a load is connected to the output interface 23, and if yes, further detects and acquires information of the load. When the energy storage device is started, the detection unit 101 continuously detects state information of the circuit of the energy storage device and the components in the circuit. When the battery pack 40 is mounted on the energy storage device and is conductively connected to the built-in battery 10, the detection unit 101 detects that the battery pack 40 is circuit-connected to the energy storage device. The detection unit 101 further detects electrical information of the battery pack 40, such as rated voltage, capacity, real-time voltage, etc.

The identification unit 102 is communicatively connected to the detection unit 101 to identify current states of the components and determine an electricity source and an electricity demand. The electricity source includes an external electricity source and the built-in battery 10, may also include the battery pack 40, and further includes a type of the external electricity source and electrical information (including but not limited to real-time voltage, rated voltage, etc.) of the built-in battery 10. The electricity demand is to supply electrical power to the load, charge the built-in battery 10, and/or charge the battery pack 40, and further includes electrical information (including but not limited to a required current type, required power, rated voltage, etc.) of the load, electrical information of the built-in battery 10, and electrical information (including but not limited to real-time voltage, rated voltage, etc.) of the battery pack 40.

The comparison unit 103 is communicatively connected to the identification unit 102 to determine a current type and power of electricity supply and a required current type and power according to the electricity source and the electricity demand, and then output a charging control instruction and/or a discharging control instruction, so that the charging unit 104 and/or the discharging unit 105 executes the charging control instruction and/or the discharging control instruction.

The charging unit 104 is communicatively connected to the comparison unit 103 to execute the charging control instruction sent by the comparison unit 103. The charging unit 104 is circuit-connected to the circuit and components of the energy storage device to control charging of the energy storage device and convert the charge current supplied into a charge current that meets the electricity demand to charge the corresponding battery pack 40. The discharging unit 105 is communicatively connected to the comparison unit 103 to execute the discharging control instruction sent by the comparison unit 103.

The discharging unit 105 is circuit-connected to the circuit and components of the energy storage device to control discharging of the energy storage device, and convert the discharge current released during electrical power supply to a discharge current that meets the electricity demand, to discharge electricity to the corresponding load.

First, an application scenario in which the energy storage device charges the built-in battery 10 and/or the battery pack 40 will be described.

Specifically, the detection unit 101 detects that the battery pack 40 is circuit-connected to the energy storage device. The detection unit 101 further detects and acquires real-time electrical information of the battery pack 40. The identification unit 102 identifies that a real-time voltage of the battery pack 40 does not reach a rated voltage, determines that the current quantity of electricity of the battery pack 40 is insufficient, and identifies that the electricity demand is to charge the battery pack 40.

The detection unit 101 detects electrical information of the built-in battery 10. The identification unit 102 identifies that a real-time voltage of the built-in battery 10 does not reach a rated voltage, and identifies that the electricity demand is to charge the built-in battery 10.

The detection unit 101 detects that the input interface 21 is connected to an external power supply and is in the powered state. The identification unit 102 identifies that the electricity source is the external power supply.

The charging control instruction generated by the comparison unit 103 according to the comparison between the electricity source and the electricity demand is: charging the built-in battery 10 and the battery pack 40 with electrical power from the external power supply. The charging unit 104 executes the charging control instruction.

Preferably, the electricity demand is to charge both the built-in battery 10 and the battery pack 40, and the charging control instruction generated by the comparison unit 102 is: charging the battery pack 40 first, and charging the built-in battery 10 after the charging of the battery pack 40 is completed.

If the detection unit 101 detects that two or more battery packs 40 are circuit-connected to the energy storage device, and the identification unit 102 identifies that real-time voltages of the two or more battery packs 40 do not reach the rated voltage, i.e., identifies that the electricity demand is to charge the two or more battery packs 40, the comparison unit 103 acquires an electricity demand of each battery pack 40, determines a charging mode for each battery pack 40 to be charged, and outputs a charging control instruction. The charging unit 104 executes the charging control instruction to control the charge current to charge each battery pack 40.

In an example of the present disclosure in which two or more battery packs 40 are to be charged, the comparison unit 103 controls the charging unit 104 to simultaneously charge the battery packs 40 to be charged. In other words, the charging control instruction of the comparison unit 103 is to simultaneously charge the battery packs 40 to be charged. The charging unit 104 controls the charge current to flow into the battery packs 40 along charging branches connected to the battery packs 40 to simultaneously charge the battery packs 40 to be charged.

In an example of the present disclosure in which two or more battery packs 40 are to be charged, the comparison unit 103 compares an electricity demand of each battery pack 40, determines a charging priority of each battery pack 40, and sequentially charges the battery packs 40 to be charged according to the charging priorities. The charging control instruction includes: sequentially charging the battery packs 40 to be charged according to the charging priorities of the battery packs. The charging unit 104 controls the charge current to flow into the battery packs 40 sequentially according to the charging priorities, to sequentially charge the battery packs 40.

Charging priorities of battery packs are preset in the comparison unit 103, and the comparison unit 103 generates a corresponding charging control instruction according to the preset charging priorities of the battery packs to charge the two or more battery packs 40.

In an example of setting of the charging priorities of the battery packs, the battery pack 40 having a larger remaining quantity of electricity has priority to be charged. The identification unit 102 identifies a real-time voltage of each battery pack 40, determines a remaining quantity of electricity of each battery pack 40, and sends the remaining quantity of electricity of each battery pack 40 to the comparison unit 103. The comparison unit 103 compares the remaining quantity of electricity of each battery pack 40, determines a charging priority of each battery pack 40 to be charged according to the remaining quantity of electricity of each battery pack 40, and outputs a charging control instruction. The charging unit 104 executes the charging control instruction to charge the battery packs 40 according to the charging priorities of the battery packs. The charging unit 104 controls the charge current to flow into the battery pack 40 having the largest remaining quantity of electricity in priority along the charging branch corresponding to the battery pack 40 having the largest remaining quantity of electricity, so as to first complete the charging of the battery pack 40 having the largest remaining quantity of electricity, and then controls the charge current to sequentially charge the remaining battery packs 40 in a descending order of the remaining quantities of electricity.

Since the battery pack 40 having the largest remaining quantity of electricity has priority to be charged, the charging of a battery pack 40 can be quickly completed, so that a fully charged battery pack 40 can be obtained as soon as possible, and can be removed from the energy storage device for use.

In an example of setting of the charging priorities of the battery packs, the battery pack 40 having a smaller remaining quantity of electricity has priority to be charged. The identification unit 102 identifies the remaining quantity of electricity of each battery pack 40 to be charged. The comparison unit 103 determines a charging priority of each battery pack 40 according to the remaining quantity of electricity of each battery pack 40, and sends a charging control instruction to the charging unit 40. The charging unit 40 controls the charge current to flow into the battery pack 40 having the smallest remaining quantity of electricity in priority along the charging branch corresponding to the battery pack 40 having the smallest remaining quantity of electricity, and after the charging of the battery pack 40 having the smallest remaining quantity of electricity is completed, controls the charge current to sequentially charge the remaining battery packs 40 in an ascending order of the remaining quantities of electricity.

Since the battery pack 40 having the smallest remaining quantity of electricity has priority to be charged, the battery pack 40 having the smallest quantity of electricity can be charged to a usable state as soon as possible for use.

In another example of the present disclosure in which two or more battery packs 40 are to be charged, the comparison unit 103 instructs the charging unit 104 to alternately charge the battery packs 40.

A charging threshold for each releasing of the charge current to the battery pack 40 is preset in the comparison unit 103. The comparison unit 103 instructs the charging unit 104 to, after charging one battery pack 40 to the charging threshold, switch to charge another battery pack 40, and after the another battery pack 40 is charged to the charging threshold, continue to sequentially charge the other battery packs 40. The charge threshold is implemented as a single charging time or a single charging quantity.

In some other examples of setting of the charging order of the built-in battery 10 and the battery pack 40, the built-in battery 10 has priority to be charged, and then the battery pack 40 is charged.

In some other examples, the built-in battery 10 and the battery pack 40 are charged in a descending order of voltages. In some other examples, the built-in battery 10 and the battery pack 40 are charged in an ascending order of voltages. In some other examples, the built-in battery 10 and the battery pack 40 are simultaneously charged. In some other examples, the built-in battery 10 and the battery pack 40 are alternately charged.

Further, in another case, the detection unit 101 detects that the input interface 21 is not connected to an external power supply, and the identification unit 102 identifies that the voltage of the built-in battery 10 is not 0 V, i.e., there is a remaining quantity of electricity in the built-in battery 10, and identifies that the electricity source is the built-in battery 10. The charging control instruction generated by the comparison unit 103 according to the comparison between the electricity source and the electricity demand is: charging the battery pack 40 with the built-in battery 10. The charging unit 104 receives the charging control instruction, and controls the built-in battery 10 to release a charge current to the battery pack 40.

Further, how to identify that the electricity demand is to charge the battery pack 40 will be described. In one case, the detection unit 101 detects a battery pack 40 connected to the energy storage device and electrical information of the battery pack 40, and the identification unit 102 identifies a real-time voltage and a rated voltage of the battery pack 40. If identifying that the real-time voltage does not reach the rated voltage, the identification unit 102 identifies that the electricity demand is to charge the battery pack 40.

In one case, the detection unit 101 detects a battery pack 40 connected to the energy storage device and does not detect a load connected to the energy storage device, and when identifying that a real-time voltage of the battery pack 40 does not reach a rated voltage, the identification unit 102 identifies that the electricity demand is to charge the battery pack 40.

In one case, the detection unit 101 detects a battery pack 40 connected to the energy storage device and a load connected to the energy storage device, and when identifying that a real-time voltage of the battery pack 40 does not reach a rated voltage, the identification unit 102 identifies that the electricity demand is to charge the battery pack 40 and supply electrical power to the load. The identification unit 102 identifies the electricity source, and transmits the electricity source and the electricity demand to the comparison unit 103. The comparison unit 103 compares the electricity source with the electricity demand. If the electricity source is sufficient to meet the electricity demand, the comparison unit 103 sends a charging control instruction and a discharging control instruction, to control the charging unit 104 and the discharging unit 105 to respectively release a charge current to the battery pack 40 and a discharge current to the load.

In addition, if the identification unit 102 identifies that the electricity source is an external power supply, the comparison unit 103 compares the electricity source which is the external power supply with the electricity demand. If the external power supply can meet a charging demand of the battery pack 40 and an electricity demand of the load, the comparison unit 103 sends a charging control instruction and a discharging control instruction to control the charging unit 104 and the discharging unit 105 to respectively release a charge current to the battery pack 40 and a discharge current to the load.

If the identification unit 102 identifies that the electricity source is the built-in battery 10, the comparison unit 103 compares power of the built-in battery 10 with a required power of the battery pack 40 and a required power of the load, and if the power of the built-in battery 10 is sufficient to satisfy the required power of the battery pack 40 and the required power of the load, the charging unit 104 controls the built-in battery 10 to release a charge current to the battery pack 40 and release a discharge current to the load. If the power of the built-in battery 10 is not sufficient to satisfy the required power of the battery pack 40 and the required power of the load, the discharge current or the charge current is released in priority. Preferably, the built-in battery 10 is controlled to release the discharge current to the load in priority to supply electrical power to the load to meet the user's demand for using the load.

If the detection unit 101 detects that the input interface 21 is connected to an external power supply, the identification unit 102 identifies a type of the external power supply, and outputs the electricity source to the comparison unit 103. The comparison unit 103 compares the electricity source with the electricity demand, determines a current transmission path and whether current conversion is required, and outputs a charging control instruction to the charging unit 104. The charging unit 104 executes the charging control instruction to control the current to flow from the input interface 21 to the inverter 22. If current conversion is required, the inverter 22 is controlled to convert the current to output a charge current that meets the electricity demand to charge the battery pack 40.

The detection unit 101 continuously detects real-time electrical information of each battery pack 40, and when detecting that a real-time voltage of a battery pack 40 reaches a rated voltage, sends a charging completion signal to the charging unit 104, so that the charging unit 104 stops charging the corresponding battery pack 40. The charging unit 104 continues to alternately release the charge current to the remaining battery packs 40 for a single charging time, until the detection unit 101 detects that the real-time voltage of each battery pack 40 to be charged reaches the rated voltage. In this case, the detection unit 101 sends a feedback to the charging unit 104, so that the charging unit 104 stops the charge current from flowing into the battery packs 40. Alternatively, when detecting that a real-time voltage of a battery pack 40 reaches a preset value, the detection unit 101 sends a charging completion signal to the charging unit 104, so that the charging unit 104 stops charging the battery pack 40 whose voltage reaches the preset value, and continues to alternately charge the remaining battery packs 40 to be charged, until the real-time voltages of the battery packs 40 to be charged all reach the preset value.

Alternatively, after a battery pack 40 to be charged is connected to the energy storage device by manual control, the battery pack 40 is charged. The battery pack 40 is provided with a physical switch to control on and off of the battery pack 40. The user manually operates the physical switch to turn on the battery pack 40, enabling the battery pack 40 to be conductively connected to the energy storage device, so that the battery pack 40 can be charged. The user may manually turn on the battery pack 40 to be charged as required, so that the battery pack 40 is charged.

Next, an application scenario in which the energy storage device discharges electricity to the load will be described.

After the load is connected to the energy storage device and the load and the energy storage device successfully identify identity information of each other, the load is conductively connected to the energy storage device, and the load sends an electricity usage request to the energy storage device.

Specifically, when the energy storage device is started, and the detection unit 101 detects the circuit of the energy storage device and the components in the circuit. The load is connected to the output interface 23. The detection unit 101 detects that the load is connected to the circuit of the energy storage device. The detection unit 101 further acquires an electricity usage request sent by the load, and detects information of the load. The identification unit 102 identifies the electricity source and the electricity demand according to a detection result of the detection unit 101.

In one scenario of the present disclosure, the detection unit 101 detects that the input interface 21 is connected to an external power supply and the output interface 23 is connected to a load, and detects information of the load. The identification unit 102 identifies that the electricity source is the input interface 21, and identifies an electricity demand of the load according to the information of the load. The comparison unit 103 compares the electricity source with the electricity demand to determine a current inputted and a current to be outputted for discharging, and outputs a discharging control instruction. The discharging unit 105 executes the discharging control instruction to control the electricity source to release a discharge current to the load. If the discharge current requires current conversion, the required current conversion may be performed to release a discharge current that meets the electricity demand to the load. The discharging unit 105 controls the current from the input interface 21 to flow into the inverter 22. If current conversion is required, corresponding conversion is performed on the current. Then, the inverter 22 outputs a discharge current, which is transmitted to the load through the output interface 23, to supply electrical power to the load. In other words, the current acquired by the input interface 21 is processed by the inverter 22 into a discharge current that meets the electricity demand of the load, which is transmitted to the load through the output interface 23.

In one scenario of the present disclosure, the detection unit 101 detects that the input interface 21 is not connected to an external power supply and the built-in battery 10 has electrical power stored therein, and detects information of the load. The identification unit 102 identifies that the electricity source is the built-in battery 10 and a discharge power of the built-in battery 10, and the electricity demand is electricity usage of the load and a required power of the load. The comparison unit 103 compares the discharge power of the built-in battery 10 with the electricity demand of the load, and determines a discharging path and whether current conversion is required. If the discharge power of the built-in battery 10 is sufficient to meet the required power of the load, the discharging unit 105 controls the built-in battery 10 to release a discharge current, which flows through the inverter 22. If current conversion is required, the inverter 22 is controlled to perform corresponding current conversion to output a discharge current that meets the electricity demand to the output interface 23. The discharge current is transmitted to the load through the output interface 23 to supply electrical power to the load.

In one scenario of the present disclosure, the battery pack 40 and the built-in battery 10 may be used to jointly discharge as required. The battery pack 40 is used to expand the capacity of the energy storage device to meet a higher electricity demand.

In a preferred embodiment, the detection unit 101 detects that a load is connected to the energy storage device, the identification unit 102 identifies an electricity demand of the load, the detection unit 101 detects that the energy storage device is not connected to an external power supply, and the identification unit 102 identifies that the electricity source is the built-in battery 10. When the detection unit 101 detects that a battery pack 40 is connected to the energy storage device, the identification unit 102 identifies that the battery pack 40 can be used as an electricity source. The discharging control instruction generated by the comparison unit 103 according to the comparison between the electricity source and the electricity demand is: connecting the built-in battery 10 and the battery pack 40 in a capacity-combined manner.

The connection of the built-in battery 10 and the battery pack 40 in a capacity-combined manner is implemented as: in response to an electricity usage request of the load and connection of the battery pack 40, connecting the built-in battery 10 and the battery pack 40 in a capacity-combined manner; or in response to an operation on the capacity-combining control key, connecting the selected battery pack 40 and the built-in battery 10 in a capacity-combined manner; or when the voltage of the built-in battery 10 is lower than the first low-voltage threshold, connecting the battery pack 40 and the built-in battery 10 in a capacity-combined manner.

Further, the discharging control instruction includes an output mode of the built-in battery 10 and the battery pack 40 connected in a capacity-combined manner.

**In** an example, the output mode is as follows: the built-in battery 10 is discharged first, and after the discharging of the built-in battery 10 is completed, switching is performed to allow the battery pack 40 connected in a capacity-combined manner to discharge.

That the discharging of the built-in battery 10 is completed is optionally that the voltage of the built-in battery 10 is 0 V or the voltage of the built-in battery 10 is lower than the first low-voltage threshold.

In an example, the output mode is as follows: one with a higher voltage of the built-in battery 10 and the battery pack 40 is discharged first; and after the built-in battery 10 and the battery pack 40 reach a voltage-equalized state, the built-in battery 10 and the battery pack 40 jointly discharge electricity.

The identification unit 102 identifies that two or more battery packs 40 are the electricity source and are available for being connected to the built-in battery 10 in a capacity-combined manner, and the discharging control instruction generated by the comparison unit 103 further includes: after switching to the battery pack 40 to discharge, controlling the two or more battery packs 40 to discharge according to a preset battery pack discharging order.

In an implementation, the preset battery pack discharging order is: sequentially controlling the two or more battery packs 40 connected in the capacity-combined manner to discharge in a descending order of voltages of the two or more battery packs.

In an implementation, the preset battery pack discharging order is: sequentially controlling the two or more battery packs 40 connected in the capacity-combined manner to discharge in an ascending order of voltages of the two or more battery packs.

In an implementation, the preset battery pack discharging order is: a battery pack 40 with a highest voltage of the two or more battery packs 40 is discharged first; when a voltage of the battery pack 40 with the highest voltage is equal to a voltage of a battery pack 40 with a second highest voltage of the two or more battery packs 40, the battery pack 40 with the highest voltage and the battery pack 40 with the second highest voltage jointly discharge electricity; and so on until voltages of the two or more battery packs 40 connected in the capacity-combined manner are equal, so that the two or more battery packs 40 jointly discharge electricity.

Specifically, the detection unit 101 detects that the input interface 21 is not connected to an external power supply and the built-in battery 10 has electrical power stored therein, and detects that the battery pack 40 is electrically connected to the circuit of the energy storage device. The identification unit 102 identifies that the electricity source may be selected from the built-in battery 10 and/or the battery pack 40. In addition, the identification unit 102 identifies the required power of the load according to information of the load detected by the detection unit 101, and identifies a discharge power of the built-in battery 10 and a discharge power of the battery pack 40. The comparison unit 103 determines a discharging entity and a discharging path, and whether current conversion is required, according to the required power of the load, the discharge power of the built-in battery 10, and the discharge power of the battery pack 40, and outputs a discharging control instruction to the discharging unit 105.

The identification unit 102 identifies the electricity demand of the load, including the required power and a required current type, according to the information of the load detected and acquired by the detection unit 101. The identification unit 102 identifies a real-time voltage of the built-in battery 10 and a real-time voltage of the battery pack 40 according to electrical information of the built-in battery 10 and the battery pack 40 detected and acquired by the detection unit 101, and determines the discharge power of the built-in battery 10 and the discharge power of the battery pack 40. The comparison unit 103 determines the entity to release a discharge current and whether the discharge current requires current conversion, according to the discharge power of the built-in battery 10, the discharge power of the battery pack 40, the required power of the load, the type of the discharge current released by the built-in battery 10, the type of the discharge current released by the battery pack 40, and the current type required by the load.

In an example of capacity-combined discharging in the present disclosure, the built-in battery 10 and the battery pack 40 are connected in a capacity-combined manner to discharge electricity to the load. In other words, the detection unit 101 detects that the load and the battery pack 40 are connected to the energy storage device, and the identification unit 102 identifies that the load needs to use electricity and the electricity source is the built-in battery 10 and the battery pack 40. The comparison unit 103 outputs a discharging control instruction, which is controlling the built-in battery 10 and the battery pack 40 to jointly discharge electricity to the load, and determines whether current conversion is required. The discharging unit 105 controls the built-in battery 10 and the battery pack 40 to be connected in a capacity-combined manner to release a discharge current. If current conversion is required, the discharge current is converted by the inverter 22, and then transmitted to the load through the output interface 23 to supply electrical power to the load. In other words, when the battery pack 40 is connected to the energy storage device, and it is detected that a load needing to use electricity is connected to the energy storage device, the energy storage device connects the built-in battery 10 and the battery pack 40 in a capacity-combined manner to release a discharge current to supply electrical power to the load.

Further, the comparison unit 103 determines a mode of connecting the built-in battery 10 and the battery pack 40 in a capacity-combined manner according to the electrical information of the built-in battery 10 and the battery pack 40. The comparison unit 103 compares a real-time voltage of the built-in battery 10 and a real-time voltage of the battery pack 40, and if the voltage of the built-in battery 10 is different from the voltage of the battery pack 40, controls the discharging unit 105 to first adjust the voltage of the built-in battery 10 and the voltage of the battery pack 40 until the voltage of the built-in battery 10 is the same as the voltage of the battery pack 40, and then control the built-in battery 10 and the battery pack 40 to be connected in a capacity-combined manner. The voltages may be adjusted by decreasing the voltage of the built-in battery 10 or the battery pack 40 having a higher voltage to be the same as the voltage of the battery pack 40 or the built-in battery 10 having a lower voltage, or by increasing the voltage of the built-in battery 10 or the battery pack 40 having a lower voltage to be the same as the voltage of the battery pack 40 or the built-in battery 10 having a higher voltage. After the voltages of the built-in battery 10 and the battery pack 40 are adjusted to be the same, the discharging unit 104 controls the built-in battery 10 and the battery pack 40 to be connected in a capacity-combined manner to release a discharge current, which is outputted to the load through the output interface 23 to supply electrical power to the load.

In an example of capacity-combined discharging in the present disclosure, whether to connect the built-in battery 10 and the battery pack 40 in a capacity-combined manner is selected according to the required power of the load and the quantity of electricity of the built-in battery 10. Specifically, the identification unit 102 identifies the required power of the load and the discharge power of the built-in battery 10, and the comparison unit 103 compares the discharge power of the built-in battery 10 with the required power of the load. If the discharge power of the built-in battery 10 exceeds the required power of the load, the comparison unit 103 determines to use the built-in battery 10 to discharge electricity to the load, and outputs a corresponding discharging control instruction to the discharging unit 105. The discharging unit 105 controls the built-in battery 10 to release a discharge current, which is transmitted to the load through the output interface 23. If the comparison unit 103 analyzes that the discharge power of the built-in battery 10 cannot meet the required power of the load, the identification unit 102 identifies the discharge power of the battery pack 40. If there are two or more battery packs 40 connected to the energy storage device, the identification unit 102 identifies the discharge power of each battery pack 40 according to the information detected and acquired by the detection unit 101. The comparison unit 103 acquires the discharge power of each battery pack 40, and determines, according to the discharge power of the built-in battery 10 and the required power of the load, that the discharge power of the built-in battery 10 cannot meet the required power of the load and a battery pack 40 needs to be connected to the built-in battery 10 in a capacity-combined manner. Further, the comparison unit 103 compares the discharge power of the built-in battery 10 and the discharge power of the battery pack 40 with the required power of the load, determines the battery pack 40 to be connected to the built-in battery 10 in a capacity-combined manner, and outputs a discharging control instruction. According to the discharging control instruction, the discharging unit 105 controls the corresponding battery pack 40 and the built-in battery 10 to be connected in a capacity-combined manner to release a discharge current. If the voltage of the battery pack 40 is different from that of the built-in battery 10, the built-in battery 10 and the battery pack 40 are adjusted to have the same voltage, and then connected in a capacity-combined manner. The method of adjusting the voltages may be increasing or decreasing the voltage of the built-in battery 10 or the battery pack 40.

Optionally, the method of adjusting the voltages of the built-in battery 10 and the battery pack 40 to be connected in a capacity-combined manner is decreasing the voltage of the built-in battery 10 or the battery pack 40. The voltage of the built-in battery 10 or the battery pack 40 having a higher voltage is decreased, e.g., by releasing a certain current, until the built-in battery 10 and the battery pack 40 are in a voltage-equalized state. Then, the built-in battery 10 and the battery pack 40 are connected in a capacity-combined manner to release a discharge current. Specifically, the identification unit 102 identifies real-time voltages of the built-in battery 10 and the battery pack 40, and the comparison unit 103 compares the real-time voltages of the built-in battery 10 and the battery pack 40, and if real-time voltages are different, instructs the discharging unit 105 to first control the built-in battery 10 or the battery pack 40 having a higher voltage to release part of the current to realize voltage reduction.

Optionally, an adjustment unit 106 is arranged. The adjustment unit 106 is communicatively connected to the comparison unit 103. The comparison unit 103 determines a voltage adjustment mode for the built-in battery 10 and/or the battery pack 40 according to real-time voltage information of the built-in battery 10 and the battery pack 40, and outputs a voltage adjustment instruction to the adjustment unit 106. The adjustment unit 106 executes the voltage adjustment instruction, and sends a voltage adjustment completion signal to the comparison unit 103 after completing the execution of the voltage adjustment instruction. **In** response to the voltage adjustment completion signal, the comparison unit 103 sends a discharging control instruction to instruct the discharging unit 105 to connect the built-in battery 10 and the battery pack 40 in a capacity-combined manner to release a discharge current.

When the voltages of the built-in battery 10 and the battery pack 40 to be connected in a capacity-combined manner are adjusted to a voltage-equalized state by voltage reduction, the adjustment unit 106 decreases the voltage of the built-in battery 10 or the battery pack 40 having a higher voltage.

Optionally, the method of adjusting the voltages of the built-in battery 10 and the battery pack 40 to be connected in a capacity-combined manner is increasing the voltage of the built-in battery 10 or the battery pack 40, and the adjustment unit 106 increases the voltage of the built-in battery 10 or the battery pack 40 having a lower voltage.

Optionally, the adjustment unit 106 adjusts the voltages of the built-in battery 10 and the battery pack 40 to reach a voltage equalization threshold, so that the built-in battery 10 and the battery pack 40 are in a voltage-equalized state. The built-in battery 10 and/or the battery pack 40 reach the voltage-equalized state through the voltage increasing or decreasing process performed by the adjustment unit 106.

In an example of capacity-combined discharging in the present disclosure, whether to connect the built-in battery 10 and the battery pack 40 in a capacity-combined manner is selected according to the required power of the load, the quantity of electricity of the built-in battery 10, the quantity of electricity of the battery pack 40, and the state of the circuit; and if yes, further selects a battery pack 40 to be connected to the built-in battery 10 in a capacity-combined manner. An appropriate battery pack 40 to be connected to the built-in battery 10 in a capacity-combined manner may be selected according to the operation state of the battery pack 40.

Specifically, the detection unit 101 detects the state of the circuit and the states of the components in the circuit. In particular, the detection unit 101 detects the operation state of the battery pack 40, and the identification unit 102 identifies whether the circuit of the battery pack 40 is normal. If the identification unit 102 identifies that the battery pack 40 is normal, the identification unit 102 identifies that the battery pack 40 can be used as an electricity source. If the identification unit 102 identifies that the battery pack 40 is abnormal, the identification unit 102 identifies that the battery pack 40 cannot be used as an electricity source. In other words, the battery pack 40 in a normal operation state as identified by the identification unit 102 can be used as an electricity source and be connected to the built-in battery 10 in a capacity-combined manner. By selecting the battery pack 40 in the normal operation state for capacity combining, the discharging safety can be ensured. If a voltage equalization is required, the adjustment unit 106 adjusts the built-in battery 10 and the battery pack 40 to be connected in a capacity-combined manner to a voltage-equalized state, and then the discharging unit 105 controls the built-in battery 10 and the battery pack 40 to be connected in a capacity-combined manner to release a discharge current.

In other words, when there is a battery pack 40 connected to the energy storage device and the energy storage device needs to supply electrical power to a load, it is determined according to a discharge power of the built-in battery 10 and a required power of the load whether the battery pack 40 needs to be connected in a capacity-combined manner to jointly discharge electricity to the load. When the discharge power of the built-in battery 10 cannot meet the required power of the load, the built-in battery 10 and the battery pack 40 are connected in a capacity-combined manner to obtain a discharge power that can meet the required power of the load, and release a discharge current to the load. If there are two or more battery packs 40 connected to the energy storage device, a battery pack 40 to be connected to the built-in battery 10 in a capacity-combined manner is determined according to the electricity demand of the load, the discharge power of the built-in battery 10, and the discharge power of each battery pack 40, so as to obtain a discharge power that can meet the power of the load.

The energy storage device is further provided with a discharge switching function. When the input interface 21 is connected to an external power supply, electrical power from the external power supply is used to meet the electricity demand of the load and/or the battery pack 40, and may also be used to charge the built-in battery 10. When the input interface 21 is disconnected from the external power supply and the output interface 23 remains in a state of being connected to the load, the electricity source may be switched to the built-in battery 10 and/or the battery pack 40, so that the built-in battery 10 and/or the battery pack 40 supplies electrical power to the load. Therefore, when the load continuously requests electricity usage from the energy storage device, switching may be performed in a timely manner to use the built-in battery 10 and/or the battery pack 40 as the electricity source for discharging even if the input interface 21 changes from the powered state to the unpowered state, so that the load can continuously receive electrical power and remain in an electricity-using state.

Specifically, when the detection unit 101 detects that the input interface 21 is connected to the external power supply, i.e., the input interface 21 is in the powered state, the identification unit 102 identifies that the electricity source is the external power supply. When a load is connected to the energy storage device, the detection unit 101 detects that there is a load connected to the energy storage device, and the identification unit 102 identifies that the electricity demand is to supply electrical power to the load. The comparison unit 103 compares the electricity source with the electricity demand, analyzes a current type of the electricity source and a required current type of the load, determines a type and power of a discharge current to be outputted, generates a discharging control instruction, and sends the discharging control instruction to the discharging unit 105. The discharging unit 105 executes the discharging control instruction to control the input interface 21 to output a discharge current, and if current conversion is required, controls the inverter 22 to convert the discharge current into a discharge current that meets the electricity demand, which is outputted through the output interface 23 to supply electrical power to the load. If the detection unit 101 detects that the quantity of electricity of the built-in battery 10 is insufficient, the identification unit 102 identifies that the electricity demand further includes charging the built-in battery 10, and the comparison unit 103 sends a charging control instruction to instruct the charging unit 104 to convert electrical power acquired by the input interface 21 into a charge current for charging the built-in battery 10. The energy storage device may be in a state of discharging and charging at the same time.

In the electrical power supply process, when the detection unit 101 detects that the input interface 21 is disconnected from the external power supply or stops acquiring electrical power from the external power supply, i.e., the input interface 21 changes from the powered state to the unpowered state, and the built-in battery 10 has electrical power stored therein, the identification unit 102 identifies that the electricity source is switched to the built-in battery 10, and the electricity demand is to supply electrical power to the load. The comparison unit 103 sends a new discharging control instruction according to the new electricity source and the electricity demand, to instruct the charging unit 104 to stop releasing the charge current. The discharging unit 105 switches the electricity source to the built-in battery 10 and controls the built-in battery 10 to release a discharge current. If current conversion is required, the discharge current is converted by the inverter 22 to a discharge current that meets the electricity demand of the load, which is outputted through the output interface 23 to supply electrical power to the load.

In the process of supplying electrical power to the load by the external power supply through the input interface 21, when the detection unit 101 detects that the battery pack 40 is connected to the energy storage device, and the identification unit 102 identifies that the quantity of electricity of the battery pack 40 is insufficient and there is a new electricity demand for charging the battery pack 40, the comparison unit 103 compares the electricity source with the new electricity demand, and sends a new charging control instruction to instruct the charging unit 104 to control the charge current to flow into the battery pack 40 through the built-in battery 10, to supply electrical power to the battery pack 40. At the same time, the charging unit 104 may charge the built-in battery 10, and the discharging unit 105 supplies electrical power to the load.

In the above electrical power supply process, if the detection unit 101 detects that the input interface 21 is disconnected from the external power supply or stops acquiring electrical power from the external power supply, i.e., the input interface 21 changes from the powered state to the unpowered state, the built-in battery 10 has electrical power stored therein, and the battery pack 40 has electrical power stored therein, the identification unit 102 identifies that the electricity source is switched to the built-in battery 10 and/or the battery pack 40. The identification unit 102 identifies that the electricity demand is to supply electrical power to the load without charging the built-in battery 10 and/or the battery pack 40. The comparison unit 103 compares the new electricity source with the electricity demand, and determines a new current transmission path and whether current conversion is required. The comparison unit 103 instructs the discharging unit 104 to connect the built-in battery 10 and the battery pack 40 in a capacity-combined manner to release a discharge current to supply electrical power to the load. If current conversion is required, the inverter 22 may convert the discharge current to a discharge current that meets the electricity demand for output. Alternatively, the comparison unit 103 compares the discharge power of the built-in battery 10 and the discharge power of the battery pack 40 with the required power of the load, and if the discharge power of the built-in battery 10 is sufficient to satisfy the required power of the load, determines that a current output path is from the built-in battery 10 to the load, and instructs the discharging unit 105 to control the built-in battery 10 to release a discharge current, which is processed by current conversion if necessary and outputted to the load. When the discharge power of the built-in battery 10 is insufficient to satisfy the required power of the load, the built-in battery 10 and the battery pack 40 are connected in a capacity-combined manner, and the current transmission path is from the output of the built-in battery 10 and the battery pack 40 connected in a capacity-combined manner, to the load. Further, the comparison unit 103 compares the voltages of the built-in battery 10 and the battery pack 40, and if the voltages are not in a voltage-equalized state, instructs the adjustment unit 106 to adjust the voltages of the built-in battery 10 and the battery pack 40 to the voltage-equalized state. Then, the discharging unit 105 controls the built-in battery 10 and the battery pack 40 to be connected in a capacity-combined manner to release a discharge current to the load.

In addition, after the battery pack 40 is mounted on the energy storage device, the battery pack 40 needs to be conductively connected to the energy storage device, so that the battery pack 40 is circuit-connected to the circuit of the energy storage device. In an implementation, the battery pack 40 and the energy storage device perform communication and identification with each other. The battery pack 40 and the energy storage device perform communication and identification with each other, and the built-in battery 10 and the energy storage device perform identification with each other. If the built-in battery 10 and the energy storage device successfully identify each other, the built-in battery 10 and the energy storage device are conductively connected to each other. In another implementation, the battery pack 40 is provided with a physical switch, to control on and off of the battery pack 40. The battery pack 40 is mounted on the energy storage device. The physical switch on the battery pack 40 is pressed to turn on the battery pack 40, so that the battery pack 40 is conductively connected to the energy storage device. Alternatively, after the battery pack 40 is turned on, the battery pack 40 and the energy storage device communicate with each other to identify identities of each other, and after successfully identifying the identities of each other, the battery pack 40 and the energy storage device are conductively connected for current transmission.

The mode of communication and identification will be further described below. The battery pack 40 is mounted on the energy storage device. The battery pack 40 sends a level signal to the energy storage device, to activate a battery management system (BMS) module of the energy storage device, which sends an identification signal to the battery pack 40, for example, sends an identification code stored in the energy storage device to the battery pack 40. The battery pack 40 receives the identification code, and if successfully identifying the identification code, feeds back an identification code of the battery pack 40 to the energy storage device. If the energy storage device successfully identifies the identification code of the battery pack 40, the communication and identification between the energy storage device and the battery pack 40 are successful, the energy storage device and the battery pack 40 may be conductively connected. In other words, the energy storage device and the battery pack 40 perform handshake communication, and if the handshake communication is successful, the battery pack 40 and the energy storage device are conductively connected. The communication and identification may be performed between a BMS module of the battery pack 40 and the BMS module of the energy storage device.

It should be noted that after the battery pack 40 is mounted at the housing 30, the interface of the battery pack 40 is at least partially blocked by the housing 30 to prevent the interface of the battery pack 40 from being used. In other words, after the battery pack 40 is connected to the energy storage device, the battery pack 40 itself cannot discharge, and performs current transmission with only the energy storage device.

In addition, the detection unit 101 detects the state of the circuit of the energy storage device and the operation states of the components in the circuit of the energy storage device, so that the identification unit 102 can identify whether there is an anomaly in the circuit or a component not in normal operation. When an anomaly is detected in the circuit through which the charge current flows or an anomaly is detected in the internal circuit of the battery pack 40, the comparison unit 103 controls the charging unit 104 to stop charging the battery pack 40. When an anomaly is detected in the circuit through which the discharge current flows or an anomaly is detected in the internal circuit of the load, the comparison unit 103 controls the discharging unit 105 to stop supplying electrical power to the load. When the state of the circuit returns to normal, charging or discharging is restarted.

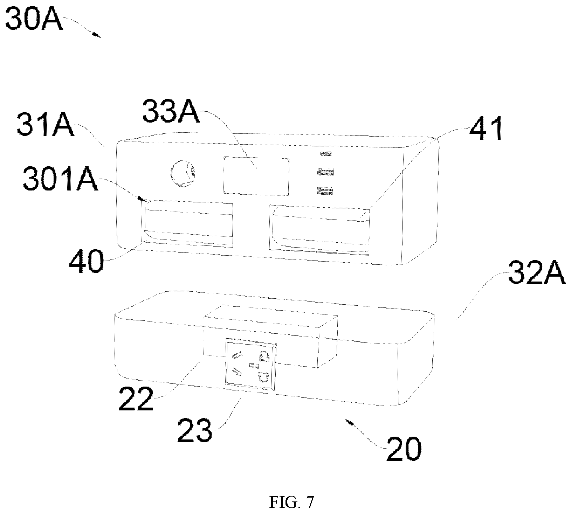

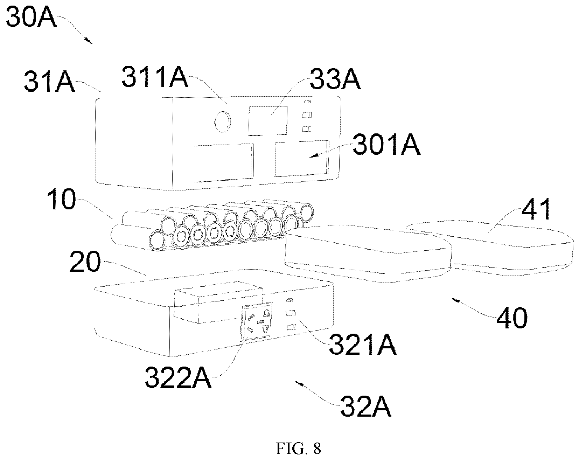

Different from the above preferred embodiment, in another preferred example of the present disclosure, referring to FIG. 7 and FIG. 8, the housing 30 of the energy storage device is a split-type housing 30A. The housing 30A includes a first housing 31A and a second housing 32A. The built-in battery 10 is arranged in the first housing 31A. The power transmitter 20 is arranged in the second housing 32A. The first housing 31A is detachably connected to the second housing 32A. The built-in battery 10 is detachably connected to the power transmitter 20. After the built-in battery 10 and the power transmitter 20 are connected, the built-in battery 10 and the power transmitter 20 may be conductively connected for current transmission.

The first housing 31A and the second housing 32A are respectively provided with a built-in battery interface and a power transmitter interface. The built-in battery interface is circuit-connected to the built-in battery, and the power transmitter interface is circuit-connected to the power transmitter 20. After the first housing 31A and the second housing 32A are connected to each other, the built-in battery interface and the power transmitter interface may be conductively connected, so that the built-in battery 10 is circuit-connected to the power transmitter 20 for current transmission. The built-in battery 10 may discharge electricity to the power transmitter 20 and serve as an electricity source of the power transmitter 20. The built-in battery 10 may also acquire electrical power from the power transmitter 20, and when the power transmitter 20 is connected to an external power supply, the built-in battery 10 acquires electrical power from the external power supply so as to be charged.

The first housing 31A is provided with at least one accommodating cavity 301A configured to receive the battery pack 40. The battery pack 40 accommodated in the accommodating cavity 301A may be conductively connected to the built-in battery 10. After the battery pack 40 is placed in the accommodating cavity 301A, the outer peripheral surface 41 of the battery pack 40 is at least partially wrapped by the accommodating cavity 301A.

One or more first DC interfaces 311A are provided on the first housing 31A. The first DC interfaces 311A are circuit-connected to the built-in battery 11 to output a direct current to the outside. The built-in battery 10 may independently output a direct current through the first DC interfaces 311A. A second DC interface 321A and an AC output interface 322A are provided on the second housing 32A. The second DC interface 321A and the AC output interface 322A are respectively connected to the power transmitter 20. The power transmitter 20 outputs a direct current and an alternating current.

Preferably, the first housing 31A is arranged at a top end of the second housing 32A, and the second housing 32A serves as a base of the first housing 31A. In other words, the built-in battery 10 is arranged at a top end of the power transmitter 20, and the power transmitter 20 serves as a base of the built-in battery 10.

After the built-in battery 10 is charged, the first housing 31A may be detached from the second housing 32A, so that the built-in battery 10 may be used independently. When connected to an external power supply, the power transmitter 20 may also be independently used to supply electrical power to the load. The battery pack 40 may be mounted at the first housing 31A, and the built-in battery 10 supplies electrical power to the battery pack 40. The built-in battery 10 may also independently supply electrical power to the load. After being charged, the battery pack 40 may also independently supply electrical power to the load. When the built-in battery 10 and the battery pack 40 are connected, whether to connect the built-in battery 10 and the battery pack 40 in a capacity-combined manner to supply electrical power to the load may be selected as required.

In other words, when used independently, the built-in battery 10 may supply electrical power to the load connected to the built-in battery 10 alone, or also may be connected to the battery pack 40 in a capacity-combined manner to supply electrical power to the load.

Optionally, a screen 33A is arranged on the first housing 31A. The screen 33A is circuit-connected to the built-in battery 10 to acquire electrical power, to display information of the built-in battery 10 for interaction with the user.

Optionally, a screen is arranged on the second housing 32A. The screen is circuit-connected to the power transmitter 20 to acquire electrical power, to display information of the power transmitter for interaction with the user.

The charging/discharging control system controls charging and discharging of the energy storage device. Different from the above preferred embodiment, the detection unit 101 detects whether the energy storage device is in a split state or a combined state. When the energy storage device is in the split state, the built-in battery 10 and the power transmitter respectively operate independently, i.e., the built-in battery 10 independently outputs a direct current, and the power transmitter 20 may output an alternating current and a direct current. When the energy storage device is in the combined state, the built-in battery 10 and the power transmitter operate jointly and output AC current.

In an example of the present disclosure, the energy storage device further includes a communication module, which is connected to the power transmitter 20 and the built-in battery 10 to perform information transmission with the power transmitter 20 and the built-in battery 10. The communication module is communicatively connected to a terminal to interact with the terminal. The user operates the terminal to acquire information of the energy storage device, to acquire information and operation states of the built-in battery 10 and the power transmitter 20. The user uses the terminal to send an operation instruction to the energy storage device to control the operation of the energy storage device.

For example, the user can learn electricity quantity information and charging and discharging operation information of the built-in battery 10, a powered or unpowered state, a current conversion status, and a current output status of the power transmitter 20, etc. through the communication between the terminal and the communication module.

When the battery pack 40 and/or the load is connected to the energy storage device, the communication module acquires information and states of the battery pack 40 and/or the load, and feeds back same to the terminal, so that the user can acquire and monitor the information and operation states of the battery pack 40 and/or the load, learn electricity quantity information, charging/discharging information, and capacity-combining information of the battery pack 40, and learn the electricity usage status and the operation state of the load, etc.

Further, the communication module is communicatively connected to the charging/discharging control system 100, so that the user operates the charging/discharging control system 100 to control the charging and discharging of the energy storage device through the communication connection between the terminal and the communication module.

With the arrangement of the communication module in the energy storage device, the energy storage device may be used as a type of application terminal in an Internet of Things to realize intelligent interconnection, so that the user can use the terminal to operate the energy storage device and set functions. Specifically, the user may use the terminal to instruct the energy storage device to charge the built-in battery 10, supply electrical power to a load, charge a battery pack 40, select a battery pack 40 to be charged, select whether to connect the built-in battery 10 and a battery pack 40 in a capacity-combined manner, select a battery pack 40 to be connected to the built-in battery 10 in a capacity-combined manner, etc. The terminal sends a corresponding control instruction in response to an operation performed by the user, and the energy storage device executes the control instruction to perform charging and/or discharging.

The control instruction from the terminal may be acquired through the charging/discharging control system 100. The charging unit 104 and the discharging unit 105 respectively execute a charging-related instruction and a discharge-related instruction. The charging/discharging control system 100 feeds back a corresponding execution status and the operation states of the components to the terminal.

It can be understood that the communication between the terminal and the energy storage device may also be implemented through a cloud. The terminal sends an instruction to the cloud, and the cloud forwards the instruction to the energy storage device, so that the energy storage device executes the related instruction. The energy storage device may feed back information to the cloud. The cloud sends related information of the energy storage device to the terminal. The cloud may store information of the energy storage device. The mode of communication between the terminal and the energy storage device may be Wi-Fi, Bluetooth, mobile communication, Ethernet, radio frequency (RF) communication, etc.

### [Charging/discharging Control Method]

According to another aspect of the present disclosure, the present disclosure further provides a charging/discharging control method, for controlling charging and discharging of an energy storage device, the method including:
connecting a battery pack to the energy storage device;
detecting that both a built-in battery of the energy storage device and the battery pack are to be charged, charging the battery pack first, and charging the built-in battery after the charging of the battery pack is completed.

The charging control method further includes:
charging two or more battery packs according to preset charging priorities of the battery packs.

The charging/discharging control method further includes:
detecting that a load is connected to the energy storage device to request electricity;
identifying the built-in battery as an electricity source to supply electrical power to the load;
detecting that the battery pack is connected to the circuit of the energy storage device, and identifying the battery pack as the electricity source; and connecting the battery pack and the built-in battery in a capacity-combined manner to output a discharge current to supply electrical power to the load.

The discharging control method further includes:
detecting that the battery pack is connected to the circuit of the energy storage device when a load is connected to the energy storage device, and identifying the battery pack as the electricity source.

The discharging control method further includes:
operating a capacity-combining control key to control the respective battery pack to be connected to the built-in battery in a capacity-combined manner.

The discharging control method further includes:
after the battery pack and the built-in battery are connected in a capacity-combined manner, controlling the built-in battery to discharge first, and after the discharging of the built-in battery is completed, switching to the battery pack to discharge.

The discharging control method further includes: after the battery pack and the built-in battery are connected in a capacity-combined manner, controlling the built-in battery and the battery pack to discharge sequentially according to a preset discharging order.

The discharging control method further includes: after the battery pack and the built-in battery are connected in a capacity-combined manner, one with a higher voltage of the battery pack and the built-in battery discharging first; and after the battery pack and the built-in battery reach a voltage-equalized state, the battery pack and the built-in battery jointly discharging.

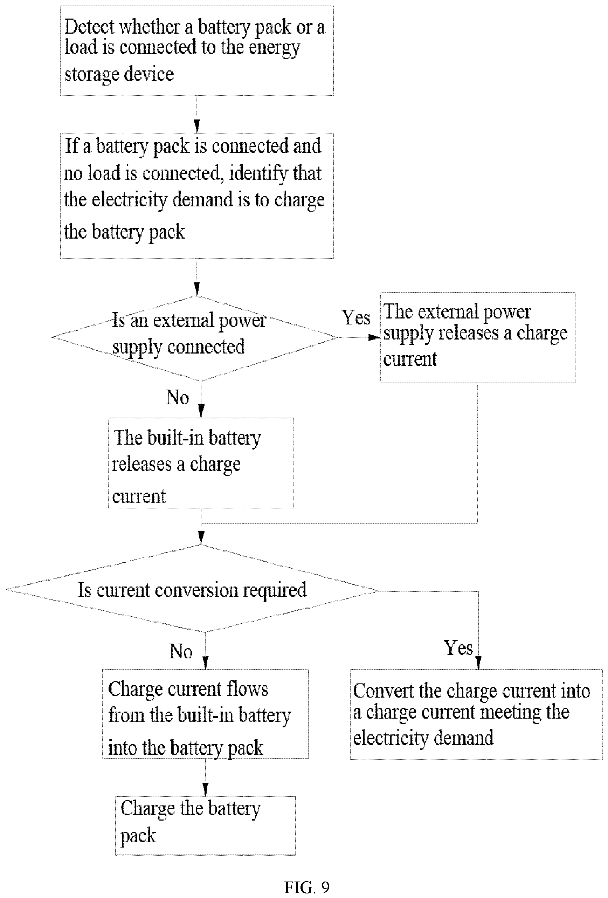

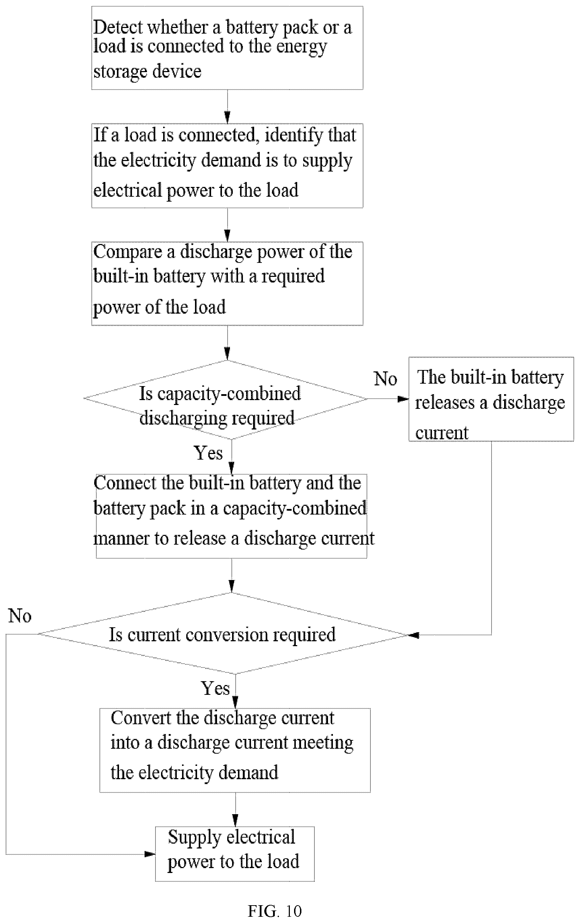

Based on the above embodiments, referring to FIG. 9 and FIG. 10, the present disclosure further provides a charging/discharging control method, for controlling charging and discharging of an energy storage device. The charging/discharging control method includes:
(A) detecting whether there is a battery pack and/or a load connected to the energy storage device, to identify an electricity demand of the energy storage device; and
(B) comparing an electrical power supply status with the electricity demand to select to release a charge current and/or a discharge current, where the built-in battery and the battery pack may be selectively connected in a capacity-combined manner to supply electrical power to the load.

The method further includes:
if identifying that a battery pack is connected to the energy storage device and the quantity of electricity of the battery pack is insufficient, identifying that the electricity demand is to charge the battery pack; and
identifying an electrical power supply status, where if it is identified that the input interface is connected to an external power supply, the electrical power supply status is supply of electrical power from the external power supply, or if it is identified that the input interface is not connected to an external power supply and the built-in battery has electrical power stored therein, the electrical power supply status is supply of electrical power from the built-in battery.

By comparing the electrical power supply status with the electricity demand, it is determined whether current conversion is required. If current conversion is required, current conversion is performed to release a charge current that meets the electricity demand to the battery pack. If current conversion is not required, the charge current is directly released to the battery pack.

The method further includes:
if identifying that a load is connected to the energy storage device, identifying that the electricity demand is to supply electrical power to the load; and
identifying an electrical power supply status, where if it is identified that the input interface is connected to an external power supply, the electrical power supply status is supply of electrical power from the external power supply, or if it is identified that the input interface is not connected to an external power supply and the built-in battery has electrical power stored therein, the electrical power supply status is supply of electrical power from the built-in battery.

The method further includes:
if identifying that a battery pack is connected to the energy storage device, identifying that the battery pack can be used as an electricity source; and
identifying that the electrical power supply status is supply of electrical power from the built-in battery and the battery pack, controlling the built-in battery and the battery pack to be connected in a capacity-combined manner to release a discharge current to supply electrical power to the load.

The method further includes: comparing a discharge power of the built-in battery and a discharge power of the battery pack with the electricity demand of the load to determine whether the built-in battery and the battery pack need to be connected in a capacity-combined manner; and if the discharge power of the built-in battery cannot meet the electricity demand of the load, connecting the built-in battery and the battery pack in a capacity-combined manner to release a discharge current to supply electrical power to the load.

The method further includes: comparing the electrical power supply status with the electricity demand to determine whether current conversion is required, and if yes, converting the discharge current to a discharge current that meets the electricity demand to supply electrical power to the load.

The method further includes: identifying switching of the electricity source, comparing the new electricity source with a real-time electricity demand, and sending a new control instruction for charging and/or discharging control.

It should be understood by those skilled in the art that the embodiments of the present disclosure shown in the foregoing description and the accompanying drawings are merely examples and are not intended to limit the present disclosure. The objective of the present disclosure has been fully and effectively achieved. The functional and structural principles of the present disclosure have been demonstrated and explained in the embodiments. Any variation or modification may be made to the embodiments of the present disclosure without departing from the principles, and different embodiments may be combined.

## Claims

1. An energy storage device, comprising an energy storage power supply and a battery pack detachably connected to the energy storage power supply, wherein
the energy storage power supply comprises:
a housing, wherein the housing is provided with a mounting part and the mounting part comprises an interface; a built-in battery and an inverter, wherein the built-in battery and the inverter are arranged in the housing without interfering with the mounting part; and
an input interface and an output interface, wherein the input interface and the output interface are provided on the housing for a user to contact and use;
the battery pack is freely detachably connected to the mounting part and comprises a power output port configured to be mechanically and electrically connected to the interface;
**characterized in that** when the battery pack is configured for the energy storage power supply, the battery pack at least has two different operation states comprising a first operation state and a second operation state, wherein
in the first operation state,
the battery pack is charged by electrical power from the energy storage power supply through the mechanical and electrical connection between the power output port and the interface; and
in the second operation state,
the battery pack and the built-in battery are coupled to the inverter through the mechanical and electrical connection between the power output port and the interface, in order to output an alternating current through the output interface.

2. The energy storage device according to claim 1, **characterized in that** the battery pack at least comprises two charging modes comprising a first charging mode and a second charging mode, wherein
in the first charging mode, when the input interface is connected to an external power supply for charging, the battery pack is charged by electrical power from the external power supply through the mechanical and electrical connection between the power output port and the interface; and
in the second charging mode, when the input interface is not connected to an external power supply for charging, the battery pack is charged by electrical power from the built-in battery through the mechanical and electrical connection between the power output port and the interface.

3. The energy storage device according to claim 1 or 2, **characterized in that** when the input interface is connected to an external power supply for charging, one of the battery pack and the built-in battery has priority to be charged, and after the charging of the one of the battery pack and the built-in battery is completed, the other of the battery pack and the built-in battery is charged.

4. The energy storage device according to claim 1, **characterized by** further comprising:
a control key, wherein the control key is configured to selectively control whether to couple the battery pack to the inverter.

5. The energy storage device according to claim 4, **characterized in that** when the control key controls the battery pack not to be coupled to the inverter, the built-in battery is configured to simultaneously supply output electrical power to the battery pack and the inverter for charging the battery pack and for the inverter to invert the output electrical power to output the alternating current.

6. The energy storage device according to claim 4, **characterized in that** when the control key controls the battery pack to be coupled to the inverter, the battery pack is configured to supply output electrical power to the inverter for the inverter to invert the output electrical power to output the alternating current.

7. The energy storage device according to claim 1, **characterized in that** when the battery pack and the built-in battery are coupled to the inverter, the built-in battery has priority to output electrical power for the inverter to output the alternating current, and when a voltage of the built-in battery decreases to a low-voltage protection threshold, switching is performed to allow the battery pack to output electrical power for the inverter to output the alternating current.

8. An energy storage device, comprising:
an energy storage power supply, wherein the energy storage power supply comprises a built-in battery, a power transmitter, and a housing, wherein
the power transmitter is configured to be connected to an external power supply to obtain electrical power for the energy storage device, the built-in battery is circuit-connected to the power transmitter to be charged and discharged through the power transmitter, and the power transmitter is configured to be connected to a load to supply electrical power to the load;
the built-in battery and the power transmitter are mounted in the housing;
**characterized in that** the energy storage device further comprises:
a battery pack, wherein the battery pack is detachably mounted at the housing and is circuit-connected to the power transmitter to be charged by the energy storage power supply, wherein when the built-in battery and the battery pack are to be charged, the battery pack has priority to be charged over the built-in battery.

9. The energy storage device according to claim 8, **characterized in that** the power transmitter is connected to the external power supply, and the energy storage device is in a powered state, and when it is detected that the built-in battery and the battery pack are to be charged, the power transmitter gives priority to converting electrical power from the external power supply into a second charge current for charging the battery pack, and after the charging of the battery pack is completed, the power transmitter converts the electrical power from the external power supply into a first charge current for charging the built-in battery.

10. The energy storage device according to claim 9, **characterized in that** when the energy storage device comprises two or more battery packs to be charged, the two or more battery packs are sequentially charged in an ascending order of quantities of electricity of the two or more battery packs.

11. The energy storage device according to claim 9, **characterized in that** when the energy storage device comprises two or more battery packs to be charged, the two or more battery packs are sequentially charged in a descending order of quantities of electricity of the two or more battery packs.

12. The energy storage device according to claim 9, **characterized in that** when the energy storage device comprises two or more battery packs to be charged, the two or more battery packs are charged simultaneously until the charging of the two or more battery packs is completed.

13. The energy storage device according to claim 9, **characterized in that** when the energy storage device comprises two or more battery packs to be charged, the two or more battery packs are charged alternately until the charging of the two or more battery packs is completed.

14. The energy storage device according to claim 8, **characterized in that** the power transmitter is not connected to the external power supply, and the energy storage device is in an unpowered state, and the built-in battery provides a discharge current to supply electrical power to the load connected to the power transmitter, wherein the battery pack is circuit-connected to a circuit of the energy storage device, and the built-in battery and the battery pack are connected in a capacity-combined manner to supply electrical power to the load.

15. The energy storage device according to claim 14, **characterized in that** the energy storage device is provided with a capacity-combining control key, the battery pack is circuit-connected to the power transmitter and is circuit-connected to the capacity-combining control key, and the capacity-combining control key is operable to control the respective battery pack to be connected to the built-in battery in the capacity-combined manner.

16. The energy storage device according to claim 14 or 15, **characterized in that** after the battery pack and the built-in battery are connected in the capacity-combined manner, the built-in battery first releases a current, the current is converted by the power transmitter into the discharge current to supply the electrical power to the load, and after the discharging of the built-in battery is completed, switching is performed to allow the battery pack to discharge electricity, and the electricity is converted by the power transmitter into the discharge current to continue to supply the electrical power to the load to prolong a discharge time of the energy storage device.

17. The energy storage device according to claim 16, **characterized in that** when the built-in battery is discharged to a voltage of 0 V, the discharging of the built-in battery is completed, and switching is performed to allow the battery pack to discharge the electricity.

18. The energy storage device according to claim 16, **characterized in that** when the built-in battery is discharged to a voltage lower than a first low-voltage threshold, the discharging of the built-in battery is completed, the built-in battery enters a low-voltage protection state, and switching is performed to allow the battery pack to discharge the electricity.

19. The energy storage device according to claim 14 or 15, **characterized in that** after the battery pack and the built-in battery are connected in the capacity-combined manner, one with a higher voltage of the battery pack and the built-in battery is first discharged, and after the battery pack and the built-in battery reach a voltage-equalized state, the battery pack and the built-in battery jointly discharge electricity, and the electricity is converted by the power transmitter into the discharge current to supply the electrical power to the load.

20. The energy storage device according to claim 16, **characterized in that** after the battery pack and the built-in battery are connected in the capacity-combined manner, the battery pack and the built-in battery jointly discharge electricity, and the electricity is converted by the power transmitter into the discharge current to supply the electrical power to the load, wherein after the battery pack is discharged to a voltage lower than a second low-voltage threshold, the battery pack stops discharging and enters a low-voltage protection state, and after the built-in battery is discharged to a voltage lower than a first low-voltage threshold, the built-in battery stops discharging and enters a low-voltage protection state.

21. A charging/discharging control system, configured to control charging and discharging of an energy storage device, **characterized by** comprising:
a detection unit, wherein the detection unit is circuit-connected to a circuit of the energy storage device to detect electrical information of components connected in the circuit of the energy storage device, and the detection unit detects whether the energy storage device is connected to a battery pack and further detects electrical information of the battery pack;
an identification unit, wherein the identification unit is communicatively connected to the detection unit to identify an electricity source and an electricity demand of the energy storage device according to the electrical information detected by the detection unit;
a comparison unit, wherein the comparison unit is communicatively connected to the identification unit to compare the electricity source and the electricity demand and correspondingly generate a charging control instruction and/or a discharging control instruction, and when the electricity demand is to charge a built-in battery of the energy storage device and the battery pack connected to the energy storage device, the charging control instruction generated by the comparison unit comprises: charging the battery pack in priority, and then charging the built-in battery after the charging of the battery pack is completed; and
a charging unit, wherein the charging unit is circuit-connected to the comparison unit to execute the charging control instruction.

22. The charging/discharging control system according to claim 21, **characterized in that** the charging control instruction generated by the comparison unit further comprises: charging two or more battery packs connected to the energy storage device according to preset charging priorities of the two or more battery packs.

23. The charging/discharging control system according to claim 21, **characterized in that** the detection unit detects that a power transmitter of the energy storage device is connected to a load, the identification unit identifies that the electricity demand is to supply electrical power to the load, and the comparison unit generates the discharging control instruction according to a comparison between the electricity source identified by the identification unit and the electricity demand, wherein the charging/discharging control system further comprises:
a discharging unit, wherein the discharging unit is communicatively connected to the comparison unit to execute the discharging control instruction to control the energy storage device to output a discharge current to supply the electrical power to the load.

24. The charging/discharging control system according to claim 23, **characterized in that** when the detection unit detects that the battery pack is connected to the load, and the identification unit identifies that the electricity source is the built-in battery and the battery pack being available for supplying electrical power, the discharging control instruction generated by the comparison unit comprises: connecting the built-in battery and the battery pack in a capacity-combined manner to output the discharge current in the capacity-combined manner to supply the electrical power to the load.

25. The charging/discharging control system according to claim 24, **characterized in that** the detection unit detects that the battery pack is connected to the energy storage device, and the identification unit identifies that the battery pack is the electricity source and is available for being connected to the built-in battery in the capacity-combined manner.

26. The charging/discharging control system according to claim 24, **characterized in that** the detection unit detects that a capacity-combining control key of the energy storage device is triggered, and the identification unit identifies that the battery pack controlled by the capacity-combining control key is the electricity source and is available for being connected to the built-in battery in the capacity-combined manner.

27. The charging/discharging control system according to claim 25 or 26, **characterized in that** the discharging control instruction further comprises an output mode of the battery pack and the built-in battery connected in the capacity-combined manner as follows: the built-in battery is discharged first, and after the discharging of the built-in battery is completed, switching is performed to allow the battery pack connected in the capacity-combined manner to discharge.

28. The charging/discharging control system according to claim 27, **characterized in that** when the detection unit detects that the built-in battery is discharged to a voltage of 0 V, the discharging of the built-in battery is completed, and the discharging unit switches to the battery pack to discharge.

29. The charging/discharging control system according to claim 27, **characterized in that** when the detection unit detects that the built-in battery is discharged to a voltage lower than a first low-voltage threshold, the discharging of the built-in battery is completed, and the discharging unit switches to the battery pack to discharge.

30. The charging/discharging control system according to claim 29, **characterized in that** when the detection unit detects that a voltage of the battery pack is lower than a second low-voltage threshold, the discharging unit stops the discharging of the battery pack.

31. The charging/discharging control system according to claim 25 or 26, **characterized in that** the discharging control instruction further comprises an output mode of the battery pack and the built-in battery connected in the capacity-combined manner as follows: one with a higher voltage of the built-in battery and the battery pack is discharged first, and after the built-in battery and the battery pack reach a voltage-equalized state, the built-in battery and the battery pack jointly discharge electricity.

32. The charging/discharging control system according to claim 27, **characterized in that** the identification unit identifies that two or more battery packs are the electricity source and are available for being connected to the built-in battery in the capacity-combined manner, and the discharging control instruction generated by the comparison unit further comprises: after switching to the two or more battery packs to discharge, controlling the two or more battery packs to discharge according to a preset battery pack discharging order.

33. The charging/discharging control system according to claim 32, **characterized in that** the preset battery pack discharging order is: sequentially controlling the two or more battery packs connected in the capacity-combined manner to discharge in a descending order of voltages of the two or more battery packs.

34. The charging/discharging control system according to claim 32, **characterized in that** the preset battery pack discharging order is: sequentially controlling the two or more battery packs connected in the capacity-combined manner to discharge in an ascending order of voltages of the two or more battery packs.

35. The charging/discharging control system according to claim 32, **characterized in that** the preset battery pack discharging order is: a battery pack with a highest voltage of the two or more battery packs is discharged first; when a voltage of the battery pack with the highest voltage is equal to a voltage of a battery pack with a second highest voltage of the two or more battery packs, the battery pack with the highest voltage and the battery pack with the second highest voltage jointly discharge electricity; and so on until voltages of the two or more battery packs connected in the capacity-combined manner are equal, so that the two or more battery packs jointly discharge electricity.
